# EUROPEAN PATENT SPECIFICATION

(11) **EP 3 616 392 B1**
(45) Date of publication and mention of the grant of the patent: **07.07.2021**
(21) Application number: 17729590.4
(22) Date of filing: 19.05.2017
(51) Int. Cl.: H04M 1/725, H04M 1/60, G06Q 20/20, G06Q 20/40, G06Q 20/02, H04M 1/215, G06Q 20/32

(54) **PAIRING COMPUTING DEVICES VIA AUDIO COMMUNICATION CHANNELS**
PAARUNG VON RECHENVORRICHTUNGEN ÜBER AUDIOKOMMUNIKATIONSKANÄLE
APPARIEMENT DE DISPOSITIFS INFORMATIQUES PAR L'INTERMÉDIAIRE DE CANAUX DE COMMUNICATION AUDIO

(30) Priority: 24.04.2017 US 201762489413 P
(43) Date of publication of application: 04.03.2020
(73) Proprietor: Google LLC, Mountain View, CA 94043 (US)
(72) Inventor: KHANNA, Heman, Hyderabad TS 500084 (IN)
(74) Representative: Maikowski & Ninnemann Patentanwälte Partnerschaft mbB
(86) International application number: PCT/US2017/033492
(87) International publication number: WO 2018/200011

(56) References cited:
- US-A1- 2010 223 145
- US-A1- 2013 185 214
- US-A1- 2014 279 537
- US-A1- 2016 232 518

## Description

### TECHNICAL FIELD

The present disclosure relates to pairing computing devices via audio communication channels between the computing devices.

### BACKGROUND

Users in emerging markets need a convenient user experience to transmit data between user computing devices. In the developed world, the tap-and-pair gesture, enabled via near-field communication ("NFC") in user computing devices makes transmission of data to or from user computing devices seamless. In emerging markets, however, many user computing devices do not have NFC functionality, making them ineligible to benefit from this NFC tap-and-pair gesture. Many user computing devices without NFC functionality comprise a speaker component and microphone component that allow for output and input of sound communication.

US 2010/0223145 A1 relates to facilitating transactions using a mobile device.

There is a need, however, for improved techniques for pairing user computing devices via an audio communication channel between the devices.

### SUMMARY

The invention is defined by the independent claims. Developments of the invention are set forth in the dependent claims.

Techniques herein provide computer-implemented methods to pair a user computing device with a service provider computing device via audible sound or ultrasound communication to process a service request. In an example, a merchant device operator initiates a service request at a first user computing device. A second user computing device associated with a user is paired to the first user computing device via an audio communication channel and a data transfer is processed. The operator of the first user computing device selects an application on the first user computing device to initiate the data transfer, selects data to transfer, and selects an image from one or more selectable images. In another example, the application on the first user computing device randomly selects an image from the one or more selectable images. In an example, the first user computing device transmits the data, a first user computing device identifier, and an image identifier associated with the selected image to an account management system. In an example, the account management system associates the transmitted data and the image identifier associated with the selected image with the first user computing device identifier.

The first user computing device broadcasts an audio token comprising a service request identifier, the selected image, and the first user computing device identifier. A user associated with the second computing device selects an application on the second computing device and selects an option to initiate a service request. In this example, in response to receiving an input of a selection of the option to initiate the service request, the second user computing device activates a microphone component of the second user computing device and receives the audio token comprising the service request identifier, the image identifier associated with selected image, and the first user computing device identifier broadcast by the first user computing device.

In an example, the second user computing device displays the image associated with the received image identifier. In this example, the user of the second computing device views that the image displayed on both the first user computing device and the second user computing device to verify that the correct two computing devices are being paired. In this example, the user of the second computing device selects the image displayed on the second computing device among a group of displayed images comprising the image to confirm the service request. In another example, the user of the second user computing device selects an image other than the displayed image on the second user computing device to cancel the service request.

In an example, in response to receiving an input of a selection of the image, the second user computing device transmits, via the network, the image identifier associated with the selected image, the first user computing device identifier, and a second user computing device identifier to the account management system system. In an example, the first user computing device and the second computing device communicate via the account management system to process the service request and/or transfer data. In another example, the first user computing device and the second user computing device establish a wireless network connection, for example, a Wi-Fi network connection, a Bluetooth network connection, an NFC network connection, a Bluetooth low-energy network connection, or other wireless network connection and the first user computing device transmits data to the second user computing device via the established wireless network connection.

In certain other example aspects described herein, systems and computer program products to pair a user computing device with a service computing device via audible sound or ultrasound communication to process a service request are provided.

These and other aspects, objects, features, and advantages of the examples will become apparent to those having ordinary skill in the art upon consideration of the following detailed description of illustrated examples.

### BRIEF DESCRIPTION OF THE DRAWINGS

Figure 1 is a block diagram depicting a system for pairing a user computing device with a service computing device via an audio communication channel to process a service request, in accordance with certain examples.
Figure 2 is a block flow diagram depicting a method for pairing a user computing device with a service computing device via an audio communication channel to process a service request, in accordance with certain examples.
Figure 3 is a block flow diagram depicting a method for registering, by a user, for an account with an processing system, in accordance with certain examples.
Figure 4 is a block flow diagram depicting a method for initiating, by a user, a service request at a service computing device, in accordance with certain examples.
Figure 5 is a block flow diagram depicting a method for pairing, by a processing system, a user computing device to a service computing device via transmission of an audio token, in accordance with certain examples.
Figure 6 is a block flow diagram depicting a method for processing a service request, in accordance with certain examples.
Figure 7 is a block diagram depicting a computing machine and module, in accordance with certain examples.

### DETAILED DESCRIPTION OF EXAMPLES

### Overview

The examples described herein provide computer-implemented techniques for pairing a user computing device with a service computing device via an audio communication channel to conduct a service request.

In an example, a service provider system registers with an account management system and installs an application on a service computing device. A user registers with the account management system and enters account information into the user account using the application. The user initiates a service request at the service computing device. The user computing device is paired to the service computing device and a service request is processed.

In other examples, the user initiates a request to share data between the user computing device and the service computing device and the user computing device is paired to the service computing device to share the requested data. For example, a first user computing device shares or receives data comprising files, images, text, or a combination thereof with a second user computing device. In another example, the second user computing device shares or receives data with the first user computing device.

In examples where the user initiates a service request at the service computing device, the service computing device operator selects the application on the service computing device to initiate the service request and selects a service request image from one or more service request images displayed by the service computing device. In another example, the application on the service computing device randomly selects a service request image from the one or more selectable service request images. In an example, the service computing device generates a service request identifier and transmits the service request identifier, the selected service request image, a service computing device identifier, and service request details to the account management system. In an example, the account management system associates the selected service request image, service computing device identifier, and service request details with the service request identifier.

In an example, the service computing device broadcasts an audio token via audible sound or ultrasound communication channel. An example audio token comprises the service request identifier, the selected service request image, the service computing device identifier, and/or one or more service request details such as the total amount of the service request. A user associated with the user computing device selects an application on the user computing device and selects an option to initiate a service request. In this example, in response to receiving an input of a selection of the option to initiate the service request, the user computing device activates a microphone component of the user computing device and receives the audio token broadcast by the service computing device via audible sound or ultrasound communication channel.

In an example, the user computing device displays one or more of the received service request details, for example, the total amount of the service request. In an example the user computing device displays one or more service request images comprising at least the received selected service request image transmitted by the service computing device to the user computing device. In an example, the user of the user computing device ensures that the service request image displayed on the service computing device matches the service request image displayed on the user computing device to verify that the correct two computing devices are being paired. In this example, the user of the user computing device selects the service request image displayed on the service computing device from among a group of displayed images that comprise the service request image to confirm the service request. In another example, the user of the user computing device selects an image other than the displayed service request image on the user computing device to cancel the service request.

In an example, the user computing device communicates the service request identifier, the service computing device identifier, and the selected service request image to the account management system. The account management system communicates with the user computing device and processes a service request. For example, if the user selected the matching service request image, the account management system processes a service request using account information associated with the user. In another example, the user did not select the matching service request image and/or instead selected a different service request image and the account management system and/or the user computing device cancels the service request.

In another example, the user computing device and the service computing device both communicate with the account management system over the network to transfer and/or receive data. The user computing device transmits user account information to the service computing device via the network and the service computing device transmits the user account information to the account management system to process a service request. In another example, the user computing device transmits user account information to the account management system via the network. In yet another example, the user computing device communicates data to the service computing device comprising files, images, text, or other data via. In this example the account management system facilitates the communication of the data over the network by receiving the data from the user computing device and transmitting it to the service computing device. In another example, the account management system facilitates the communication of data over the network by receiving the data from the service computing device and transmitting it to the user computing device

The examples described herein provide computer-implemented techniques for pairing a user computing device with a service computing device via an audio communication channel to provide data to a account management system over a network to conduct a service request or to otherwise exchange data over the network between the user computing device and the service computing device via the account management system.

The examples described herein provide computer-implemented techniques for pairing a user computing device with a service computing device via an audio communication channel to provide data to a account management system over a network to conduct a service request.

A service provider system registers with an account management system and installs an application on a service computing device. A user registers with the account management system. For example, the user accesses the account management system website via a user computing device and registers with the account management system. The user downloads an application onto the user computing device. The user enters account information into a user account using the application. The user configures permissions and settings associated with the user account using the application.

A user initiates a service request at a service computing device. For example, the user arrives at the service computing device. The service computing device operator totals items of the user for purchase. The service computing device operator asks the user to select a service processing option. The user indicates a desire to process the service request via the application. In an example, the user computing device is paired to the service computing device and a service request is processed. The service computing device operator selects the application on the service computing device to initiate a service request.

The service computing device operator selects a service request image and the service computing device displays the service request image via a user interface of the service computing device. In another example, the service computing device operator does not select a service request image and the service computing device randomly selects or randomly generates a service request image and displays the service request image. The service computing device generates a service request identifier and transmits service request details, a service request identifier, an image identifier associated with the displayed service request image, and a service computing device identifier to an account management system. The account management system receives the service request details, the service request identifier, the service request image, and the service computing device identifier.

The service computing device broadcasts an audio token comprising the service request identifier, an image identifier associated with the displayed service request image, and a service computing device identifier associated with the service computing device via a speaker component of the service computing device. A user associated with the user computing device selects the application on the user computing device and selects an option to initiate a service request. In this example, in response to receiving an input of a selection of the option to initiate the service request, the user computing device activates a microphone component of the user computing device and receives the audio token comprising the service request identifier, the service request image identifier, and the service computing device identifier broadcast by the service computing device. In another example, while the application running on the user computing device, the user computing device microphone component of the user computing device is activated and able to receive the audio token comprising the service request identifier, the service request image identifier, and the service computing device identifier broadcast by the first user computing device. In an example, the user computing device displays the received service request image corresponding to the received service request image identifier. For example, the user computing device comprises one or more stored service request images corresponding to service request image identifiers and identifies the service request image corresponding to the received service request image identifier for display. In an example, the user of the user computing device views that the service request image is displayed on both the service computing device and the user computing device to verify that the correct two computing devices are being paired. In this example, the user of the user computing device selects the service request image displayed on the user computing device among a group of displayed images comprising at least the service request image to confirm the service request. In another example, the user of the user computing device selects an image other than the displayed service request image on the user computing device to cancel the service request. In an example, in response to receiving an input of a selection of the service request image, the user computing device transmits, via the network, the service request image identifier, the service computing device identifier, and a user computing device identifier to the account management system. In an example, the service computing device and the user computing device communicate via the account management system to process the service request and/or transfer data. The service computing device transmits a request for account information or other data to the user computing device via the account management system over the network. The service computing device receives account information or other data from the user computing device over the network via the account management system. In other examples, the user computing device and the service computing device establish a wireless network connection at the merchant location and transmit and/or receive data over the wireless network connection.

Other examples are described herein for pairing a user computing device with a service computing device via a Bluetooth communication channel, a Bluetooth low-energy communication channel, or a Wi-Fi communication channel to provide data to a account management system over a network to conduct a service request.

The service computing device broadcasts the token comprising the service request identifier, an image identifier associated with the displayed service request image, and a service computing device identifier associated with the service computing device via a Bluetooth communication channel, a Bluetooth low-energy communication channel, or a Wi-Fi communication channel. A user associated with the user computing device selects the application on the user computing device and selects an option to initiate a service request. In this example, in response to receiving an input of a selection of the option to initiate the service request, the user computing device activates a microphone component of the user computing device and receives the token comprising the service request identifier, the service request image, and the service computing device identifier broadcast by the service computing device. In another example, while the application running on the user computing device, the user computing device is able to receive the audio token comprising the service request identifier, the service request image, and the service computing device identifier broadcast by the first user computing device via the Bluetooth communication channel, the Bluetooth low-energy communication channel, or Wi-Fi communication channel. For example, if the second user computing device broadcasted the token via a Bluetooth communication channel, the first user computing device receives the token via the Bluetooth communication channel. For example, if the second user computing device broadcasted the token via the Bluetooth low-energy communication channel, the first computing device receives the token via the Bluetooth low-energy communication channel. For example, if the second user computing device broadcasted the token via the Wi-Fi communication channel, the first user computing device receives the token via the Wi-Fi communication channel.

In certain examples, the user computing device pairs with another user computing device via transmitting an audio token via an audio communication channel and transmits data to the other user computing device via the account management system over the network.

A first user computing device is paired to a second user computing device and data is transferred and/or shared between the first user computing device and the second user computing device over the network via the account management system. An operator of the second user computing device selects an application on the second user computing device to initiate a transfer of data. For example, the operator of the second user computing device desires to send data to or receive data from the first user computing device. The data comprise files, images, text, applications, and/or any other transferrable data. In an example, the user of the second user computing device inputs a selection, via the user interface of the second user computing device, of one or more images, text, videos, or other files to transfer to the first user computing device. The second user computing device broadcasts an audio token via ultrasound communication or audible sound communication, comprising a second user computing device identifier and a service request image identifier. In this example, a service request image corresponding to the service request image identifier is also displayed on the second user device.

The second computing device transmits data transfer request details, a data transfer request identifier, the service request image identifier associated with the displayed service request image, and a second computing device identifier to an account management system. The data transfer request details comprise the selection, by the user of the second computing device, of the one or more images, text, videos, or other files the user desires to transfer to the first user computing device. The account management system receives the data transfer request details, the data transfer request identifier, the service request image identifier, and the second computing device identifier. An operator of the first user computing device selects an application on the first user computing device and an option to initiate a data transfer.

In an example, in response to receiving an input of a selection of the option to initiate a data transfer, the application on the first user computing device activates a microphone of the first user computing device. In an example, the first user computing device receives the audio token broadcast by the second user computing device via the microphone of the first user computing device. In an example, the first user computing device displays the service request image corresponding to the service request image identifier received in the audio token. For example, the first user computing device comprises one or more stored service request images identified by service request image identifiers and identifies the service request image for display corresponding to the received service request image identifier. In this example, the user of the first user computing device views that the service request image is displayed on both the second user computing device and the first user computing device to verify that the correct two user computing devices are being paired. In this example, the user of the first user computing device selects the service request image displayed on the second user computing device among a group of displayed images comprising at least the service request image to confirm the service request. In another example, the user of the of the first user computing device selects an image other than the displayed service request image on the first user computing device to cancel the service request. In an example, in response to receiving an input of a selection of the service request image, the first user computing device transmits, via the network, the service request image identifier associated with the service request image, the second computing device identifier, and a first user computing device identifier to an account management system.

In an example, the first computing device and the second computing device communicate via the account management system to transfer data from the first user computing device to the second user computing device or from the second user computing device to the first user computing device. In an example, the first user computing device receives data via the account management system from the second user computing device. In another example, the user of the first user computing device inputs a selection, via the user interface of the first user computing device, of one or more images, text, videos, or other files stored on the first user computing device to transfer to the second user computing device via the account management system. In this example, in response to receiving the input, the first user computing device transmits the selected files via the network to the account management system, which retransmits the selected files to the second user computing device via the network. In other examples, the first user computing device and the second user computing device establish a wireless network connection at the merchant location and transmit and/or receive data over the wireless network connection.

In certain examples, the second user computing device broadcasts a token via a Bluetooth communication channel, a Bluetooth low-energy communication channel, or a Wi-Fi communication channel, comprising a second user computing device identifier and a service request image. In this example, the service request image is also displayed on the second user device. The second computing device generates an identifier and transmits data transfer request details, a data transfer request identifier, the displayed service request image, and a second computing device identifier to an account management system. The data transfer request details comprise the selection, by the user of the second computing device, of the one or more images, text, videos, or other files the user desires to transfer to the first user computing device. The account management system receives the data transfer request details, the data transfer request identifier, the service request image, and the second computing device identifier.

An operator of the first user computing device selects an application on the first user computing device and an option to initiate a data transfer. In an example, in response to receiving an input of a selection of the option to initiate a data transfer, the application on the first user computing device activates a module of the first user computing device capable of receiving the token broadcast via Bluetooth communication channel, a Bluetooth low-energy communication channel, or a Wi-Fi communication channel. In an example, the first user computing device receives the token broadcast by the second user computing device via a Bluetooth communication channel, a Bluetooth low-energy communication channel, or a Wi-Fi communication channel. For example, if the second user computing device broadcasted the token via a Bluetooth communication channel, the first user computing device receives the token via the Bluetooth communication channel. For example, if the second user computing device broadcasted the token via the Bluetooth low-energy communication channel, the first computing device receives the token via the Bluetooth low-energy communication channel. For example, if the second user computing device broadcasted the token via the Wi-Fi communication channel, the first user computing device receives the token via the Wi-Fi communication channel.

By using and relying on the methods and systems described herein, the user computing device and the service computing device provide the capability to pair via an audio communication channel without the necessity of using NFC. Further, the user computing device, the service computing device, the account management system, and the issuer system enable the user to conduct a service request at the service computing device by pairing the user computing device to the service computing device via an audio communication channel. As such, the systems and methods described herein enable pairing via an audio communication channel of computing devices not comprising conventional NFC functionality or in an environment in which NFC is unavailable. Further, the systems and methods described herein enable pairing via an audio communication channel of computing devices comprising conventional NFC functionality at longer distances than available via NFC pairing.

### Example System Architecture

Turning now to the drawings, in which like numerals indicate like (but not necessarily identical) elements throughout the figures, examples are described in detail.

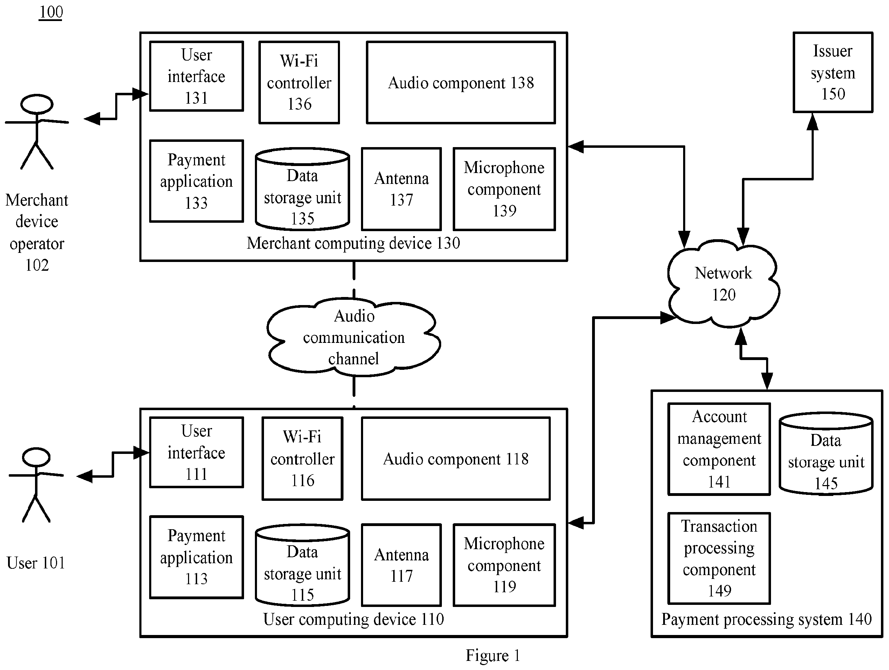

Figure 1 is a block diagram depicting a system 100 for pairing a user computing device 110 with a merchant computing device 130 via an audio communication channel to conduct a payment transaction or process a service request, in accordance with certain examples. As depicted in Figure 1, the system 100 includes network computing devices 110, 130, 140, and 150 that are configured to communicate with one another via one or more networks 120. In some embodiments, a user associated with a device must install an application and/or make a feature selection to obtain the benefits of the techniques described herein.

In examples, the network 120 can include a local area network ("LAN"), a wide area network ("WAN"), an intranet, an Internet, storage area network ("SAN"), personal area network ("PAN"), a metropolitan area network ("MAN"), a wireless local area network ("WLAN"), a virtual private network ("VPN"), a cellular or other mobile communication network, Bluetooth, Bluetooth low energy ("BLE"), near field communication ("NFC"), or any combination thereof or any other appropriate architecture or system that facilitates the communication of signals, data, and/or messages. Throughout the discussion of examples, it should be understood that the terms "data" and "information" are used interchangeably herein to refer to text, images, audio, video, or any other form of information that can exist in a computer-based environment.

Each network computing device 110, 130, 140, and 150 includes a device having a communication module capable of transmitting and receiving data over the network 120. For example, each network computing device 110, 130, 140, and 150 can include a server, desktop computer, laptop computer, tablet computer, a television with one or more processors embedded therein and / or coupled thereto, smart phone, handheld computer, personal digital assistant ("PDA"), or any other wired or wireless, processor-driven device. In the example depicted in Figure 1, the network computing devices 110, 130, 140, and 150 are operated by users 101, merchant computing device operators 102, payment processing system 140 operators, and issuer system 150 operators, respectively.

In certain embodiments, two computing devices comprising a user computing device 110 and a merchant computing device 130 are paired via an audio communication channel. However, in other examples, a first user computing device 110 and a second user computing device 110 are paired via the audio communication channel. One or more functions described herein as being performed by the user computing device 110 are performed by a first user computing device 110 and one or more functions described herein as being performed by the merchant computing device 130 are performed by a second user computing device 110. One or more functions described herein as being performed by a first computing device 110 are performed by a second computing device 110 and one or more functions herein described as being performed by the second computing device 110 are performed by the first computing device 110. One or more functions described herein as being performed by the user computing device 110 are performed by the merchant computing device 130 and one or more functions described herein as being performed by the merchant computing device 130 are performed by the user computing device 110.

An example user computing device 110, or first user computing device, comprises a user interface 111, a payment application 113, a data storage unit 115, a Wi-Fi controller 116, an antenna 117, an audio component 118, and a microphone component 119. The user computing device 110 communicates with a payment processing system 140 via the network 120 and with the merchant computing device 130 via an audio communication channel.

In an example, the user interface 111 enables the user 101 to interact with the user computing device 110. For example, the user interface 111 comprises a touch screen, a voice-based interface, or any other interface that allows the user 101 to provide input and receive output from an application on the user computing device 110. In an example, the user 101 interacts via the user interface 111 with the payment application 113.

In an example, the payment application 113 is a program, function, routine, applet, or similar entity that exists on and performs its operations on the user computing device 110. In certain examples, the user 101 must install the payment application 113 and/or make a feature selection on the user computing device 110 to obtain the benefits of the techniques described herein. In an example, the user 101 accesses the payment application 113 on the user computing device 110 via the user interface 111. In an example, the payment application 113 is associated with the payment processing system 140.

In an example, the data storage unit 115 comprises a local or remote data storage structure accessible to the user computing device 110 suitable for storing information. In an example, the data storage unit 115 stores encrypted information, such as HTML5 local storage.

In an example, the Wi-Fi controller 116 is capable of sending and receiving data, performing authentication and ciphering functions, and directing how the user computing device 110 will listen for transmissions from the merchant computing device 130 or configuring the user computing device 110 into various power-save modes according to Wi-Fi-specified procedures. In another example, the user computing device 110 comprises a Bluetooth controller, Bluetooth low energy ("BLE") controller, or an NFC controller capable of performing similar functions. An example Wi-Fi controller 116 communicates with the payment application 113 and is capable of sending and receiving data over a wireless, Wi-Fi communication channel. In another example, a Bluetooth controller, BLE controller, or NFC controller performs similar functions as the Wi-Fi controller 116 using Bluetooth, BLE, or NFC protocols. In an example, the Wi-Fi controller 116 activates the antenna 117 to create a wireless communication channel between the user computing device 110 and the merchant computing device 130. For example, the user computing device 110 communicates with the merchant computing device 130 via the antenna 117. In an example, when the user computing device 110 has been activated, the Wi-Fi controller 116 polls through the antenna 117 a radio signal, or listens for radio signals from the merchant computing device 130.

In an example, the antenna 117 is a means of communication between the user computing device 110 and a merchant computing device 130. In an example, a Wi-Fi controller 116 outputs through the antenna 117 a radio signal, or listens for radio signals from the merchant computing device 130. In another example a Bluetooth controller or a near field communication ("NFC") controller is used.

In an example, the audio component 118 comprises a speaker device or other device capable of producing an ultrasound output. In an example, the audio component 118 can communicate with the payment application 113 to receive an instruction to broadcast an ultrasound output. In an example, the audio component 118 is a component of the user computing device 110. In another example, the audio component 118 is communicatively coupled to the user computing device 110.

In an example, the microphone component 119 comprises a microphone device that is capable of receiving ultrasound inputs from an environment of the user computing device 110. In an example, the microphone component 119 communicates with the payment application 113 to receive an instruction to transition from a passive mode to an active mode and listen for ultrasound inputs. In an example, the microphone component 119 receives ultrasound inputs while in the active mode and transmits the received ultrasound inputs to the payment application 113.

An example merchant computing device 130, or second user computing device, comprises a user interface 131, a payment application 133, a data storage unit 135, a Wi-Fi controller 136, an antenna 137, an audio component 138, and a microphone component 139. In an example, the merchant computing device 130 comprises a mobile computing device such as a smartphone device, tablet device, or other mobile computing device. In another example, the merchant computing device 130 comprises a point of sale terminal. The merchant computing device 130 communicates with a payment processing system 140 via the network 120 and with the user computing device 110 via an audio communication channel. In an example, the merchant computing device 130 communicates with an issuer system 150 via the network 120. In an example, the merchant computing device 130 comprises a service computing device that communicates with the payment processing system 140 via the network 120 and with the user computing device 110 via the audio communication channel.

In an example, the user interface 131 enables the merchant computing device operator 102 to interact with the merchant computing device 130. For example, the user interface 131 comprises a touch screen, a voice-based interface, or any other interface that allows the merchant computing device operator 102 to provide input and receive output from an application on the merchant computing device 130. In an example, the merchant computing device operator 102 interacts via the user interface 131 with the payment application 133.

In an example, the payment application 133 is a program, function, routine, applet, or similar entity that exists on and performs its operations on the merchant computing device 130. In certain examples, the merchant computing device operator 102 must install the payment application 133 and/or make a feature selection on the merchant computing device 130 to obtain the benefits of the techniques described herein. In an example, the merchant computing device operator 102 accesses the payment application 133 on the merchant computing device 130 via the user interface 131. In an example, the payment application 133 is associated with the payment processing system 140.

In an example, the data storage unit 135 comprises a local or remote data storage structure accessible to the merchant computing device 130 suitable for storing information. In an example, the data storage unit 135 stores encrypted information, such as HTML5 local storage.

In an example, the Wi-Fi controller 136 is capable of sending and receiving data, performing authentication and ciphering functions, and directing how the merchant computing device 130 will listen for transmissions from the user computing device 110 or configuring the merchant computing device 130 into various power-save modes according to Wi-Fi-specified procedures. In another example, the merchant computing device 130 comprises a Bluetooth controller, Bluetooth low energy ("BLE") controller, or an NFC controller capable of performing similar functions. An example Wi-Fi controller 136 communicates with the payment application 133 and is capable of sending and receiving data over a wireless, Wi-Fi communication channel. In another example, a Bluetooth controller, BLE controller, or NFC controller performs similar functions as the Wi-Fi controller 136 using Bluetooth, BLE, or NFC protocols. In an example, the Wi-Fi controller 136 activates the antenna 137 to create a wireless communication channel between the merchant computing device 130 and the user computing device 110. For example, the merchant computing device 130 communicates with the user computing device 110 via the antenna 137. In an example, when the merchant computing device 130 has been activated, the Wi-Fi controller 136 polls through the antenna 137 a radio signal, or listens for radio signals from the merchant computing device 130.

In an example, the antenna 137 is a means of communication between the merchant computing device 130 and the user computing device 110. In an example, a Wi-Fi controller 136 outputs through the antenna 137 a radio signal, or listens for radio signals from the user computing device 110. In another example a Bluetooth controller or a near field communication ("NFC") controller is used.

In an example, the audio component 138 comprises a speaker device or other device capable of producing an ultrasound output. In an example, the audio component 138 can communicate with the payment application 133 to receive an instruction to broadcast an ultrasound output. In an example, the audio component 138 is a component of the merchant computing device 130. In another example, the audio component 138 is communicatively coupled to the merchant computing device 130.

In an example, the microphone component 139 comprises a microphone device that is capable of receiving ultrasound inputs from an environment of the merchant computing device 130. In an example, the microphone component 139 communicates with the payment application 133 to receive an instruction to transition from a passive mode to an active mode and listen for ultrasound inputs. In an example, the microphone component 139 receives ultrasound inputs while in the active mode and transmits the received ultrasound inputs to the payment application 133.

An example payment processing system 140, or account management system, comprises an account management component 141, a data storage unit 145, and a transaction processing component 149. In an example, the payment processing system communicates with the user computing device 110 and the merchant computing device 130 via the network 120. In an example, the payment processing system 140 communicates with an issuer system 150 via the network 120.

In an example, the account management component 141 manages user 101 accounts and merchant system accounts associated with users 101 and merchant systems, respectively. In other examples, the account management component 141 manages service provider system accounts associated with service provider systems. The account management component 141 receives requests to add, edit, delete, or otherwise modify payment account information for a user 101 account or a merchant system account.

In an example, the data storage unit 145 comprises a local or remote data storage structure accessible to the payment processing system 140 suitable for storing information. In an example, the data storage unit 145 stores encrypted information, such as HTML5 local storage.

In an example, the transaction processing component 149 receives transaction details from a merchant computing device 130 and payment information associated with a user 101 payment account. In another example, the transaction processing component 149 receives service request details from a service computing device 130 and account information associated with a user 101 account. In an example, the transaction processing component 149 transmits a payment authorization request to an issuer system 150 or other appropriate financial institution associated with the user 101 payment account information. An example payment authorization request comprises merchant system payment account information, user 101 payment account information, and a total amount of the transaction. In other examples, the transaction processing component 149 transmits a service request authorization request to the issuer system 150 or other appropriate institution associated with the user 101 account information. An example, service request comprises service provider system account information, user account information, and a description of the service request. In an example, after the issuer system 150 processes the payment authorization request, the transaction processing component 149 receives an approval or denial of the payment authorization request from the issuer system 150 over the network 120. In an example, the transaction processing component 149 transmits a receipt to the merchant computing device 130 and/or the user computing device 110 comprising a summary of the payment transaction.

In another example, the transaction processing component 149 receives a transaction identifier generated by the merchant computing device 130, a merchant computing device 130 identifier, and transaction details from the merchant computing device 130. For example, the transaction details comprise the total amount of the transaction and a transaction image. In an example, the transaction processing component identifies a merchant system account based on the merchant computing device 130 identifier and identifies a merchant system payment account associated with the merchant system account for use in the transaction. In an example, the transaction processing component 149 associates the received transaction details, transaction identifier and merchant system payment account information and stores the associated transaction details, transaction identifier, and merchant system payment account information in a data storage unit 145 or other memory accessible by the payment processing system 140. In an example, the transaction processing component receives the transaction identifier from the user computing device 110 and the transaction image. In this example, the transaction processing component 149 extracts the stored transaction details and merchant system payment account information associated with the transaction identifier. In an example, the transaction processing component 149 receives a user 101 payment account identifier based on a selection of the user 101 of the payment account via the user interface 111 of the user computing device 130. In this example, the transaction processing component 149 extracts the user 101 payment account information associated with the payment account identifier. In another example, the payment processing system 140 receives data from the user computing device 110 via the network 120 and transmits the data via the network 120 to the merchant computing device 130. In yet another example, the payment processing system 140 receives data from the merchant computing device 130 via the network 120 and transmits the data via the network 120 to the user computing device 110.

An example issuer system 150 approves or denies a payment authorization request received from the merchant computing system 130 or from the payment processing system 140. In an example, the issuer system 150 communicates with the merchant computing device 130 and/or payment processing system 140 over the network 120. In an example, the issuer system 130 communicates with an acquirer system to approve a credit authorization and to make payment to the payment processing system 140 and/or merchant system. For example, the acquirer system is a third party payment processing company..

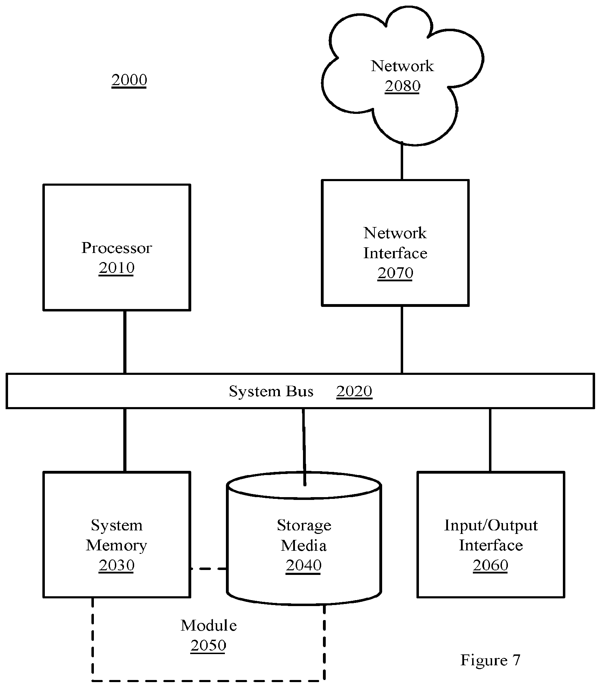

In examples, the network computing devices and any other computing machines associated with the technology presented herein may be any type of computing machine such as, but not limited to, those discussed in more detail with respect to Figure 7. Furthermore, any functions, applications, or components associated with any of these computing machines, such as those described herein or any others (for example, scripts, web content, software, firmware, hardware, or modules) associated with the technology presented herein may by any of the components discussed in more detail with respect to Figure 7. The computing machines discussed herein may communicate with one another, as well as with other computing machines or communication systems over one or more networks, such as network 120. The network 120 may include any type of data or communications network, including any of the network technology discussed with respect to Figure 7.

### Example Processes

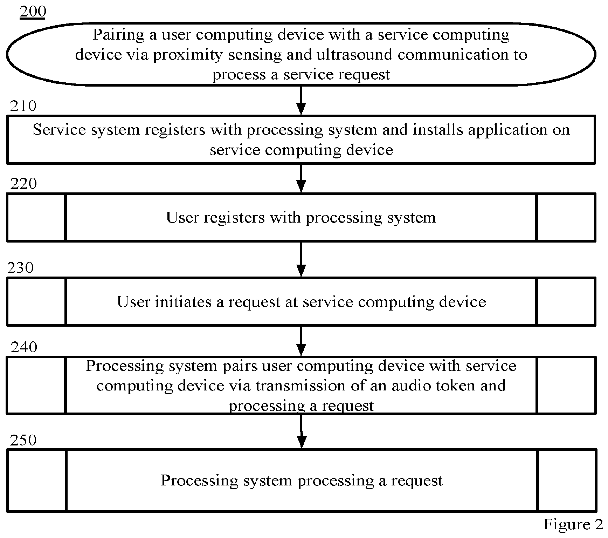

The example methods illustrated in Figures 2-6 are described hereinafter with respect to the components of the example operating environment 100. The example methods of Figures 2-6 may also be performed with other systems and in other environments. The operations described with respect to any of the Figures 2-6 can be implemented as executable code stored on a computer or machine readable non-transitory tangible storage medium (e.g., floppy disk, hard disk, ROM, EEPROM, nonvolatile RAM, CD-ROM, etc.) that are completed based on execution of the code by a processor circuit implemented using one or more integrated circuits; the operations described herein also can be implemented as executable logic that is encoded in one or more non-transitory tangible media for execution (e.g., programmable logic arrays or devices, field programmable gate arrays, programmable array logic, application specific integrated circuits, etc.).

Figure 2 is a block diagram depicting a method 200 for pairing a user computing device 110 with a service computing device 120 via an audio communication channel to process a service request, in accordance with certain examples. The method 200 is described with reference to the components illustrated in Figure 1.

In block 210, the merchant system registers with the payment processing system 140 and installs a payment application 133 on a merchant computing device 130. In an example, an agent of the merchant system registers for a merchant account with the payment processing system 140 via a website of the payment processing system 140. In an example, a merchant computing device operator 102 installs the payment application 133 on the merchant computing device 130. In another example, the merchant computing device operator 102 purchases a merchant computing device 130 from the payment processing system 140 or otherwise obtains the merchant computing device 130 with the payment application 133 pre-installed on the merchant computing device 130. In an example, the merchant computing device 130 is able to communicate with one or more user computing devices 110, the payment processing system 140, one or more issuer systems 150, and one or more acquirer systems over a network 120. In an example, the merchant computing device 130 communicates with the payment processing system 140 via the payment application 113 over the network 120. In certain examples, the merchant computing device 130 transmits transaction details and a merchant computing device 130 identifier to the payment processing system 140 via the payment application 113 to enable the payment processing system 140 to process a transaction. In an example, the merchant computing device 130 receives receipts from the payment processing system 140 that comprise a notification indicating whether a transaction was successful. In an example, the merchant computing device 130 comprises a mobile device, for example, a mobile phone device, a tablet device, or a laptop computing device. In another example, the merchant computing device 130 comprises a point of sale terminal.

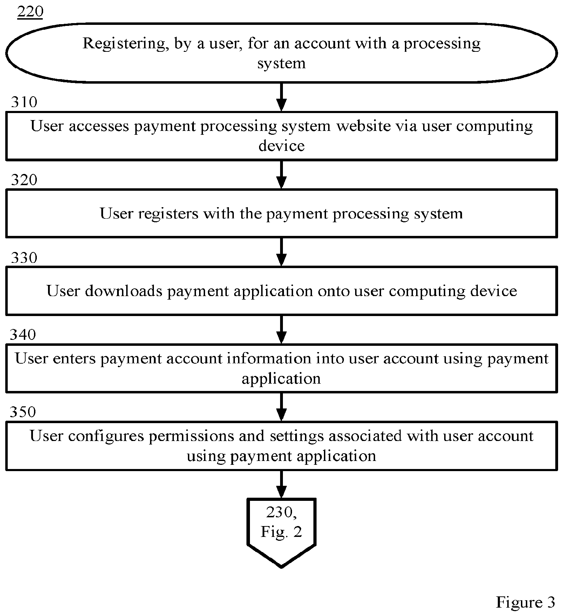

In block 220, the user 101 registers with the payment processing system 140. The method for registering, by a user 101, for an account with a processing system 140 is described in more detail hereinafter with reference to the method described in Figure 3.

Figure 3 is a block diagram depicting a method 220 for registering, by a user 101, for an account with a processing system 140, in accordance with certain examples. The method 220 is described with reference to the components illustrated in Figure 1.

In block 310, the user accesses a payment processing system 140 via the user computing device 110. For example, the user 101 accesses payment processing system 140 website via a web browser of the user computing device 110. The web browser communicates with the payment processing system 140 via the network 120. In another example, the user 101 accesses the payment processing system 140 via an application or otherwise contacts the payment processing system 140 to register for a user 101 account.

In block 320, the user 101 registers with the payment processing system 140. The user 101 obtains a user 101 account number, receives the appropriate applications and software to install on the user computing device 110 or perform an action provided by the payment processing system 140. The user 101 utilizes the functions of the user computing device 110, such as the user interface 111 and the web browser, to register and configure a user 101 account with the payment processing system 140 via the network 120.

In block 330, the user 101 downloads a payment application 113 onto the user computing device 110. For example, the user 101 downloads a payment application 113 onto the user computing device 110 via the network 120. In an example, the payment application 113 operating on the user computing device 110 is able to communicate with the payment processing system 140 over the network 120.

In block 340, the user 101 enters payment account information that is saved in or associated with the user 101 account. In an example, the user 101 enters the payment information using the payment application 113. In an example, the user 101 enters payment account information associated with one or more user 101 accounts, for example, one or more credit accounts, one or more bank accounts, one or more stored value accounts, and/or other appropriate accounts into the user 101 account maintained by the payment processing system 140. In an example, the payment application 113 communicates information entered by the user 101 via the user computing device 110 to the payment processing system 140 via the network 120. The payment processing system 140 saves the data or otherwise associates the data with the user 101 account.

In block 350, the user 101 configures permissions and/or settings associated with the user 101 account using the payment application 113. In an example, the user 101 may configure user 101 account settings, configure permissions, add, delete, or edit payment account information via the payment application 113. In an example, the user 101 selects an option via the user interface 111 to enable or disable permission authorizing the payment processing system 140 to process transactions.

From block 350, the method 220 proceeds to block 230 in Figure 2.

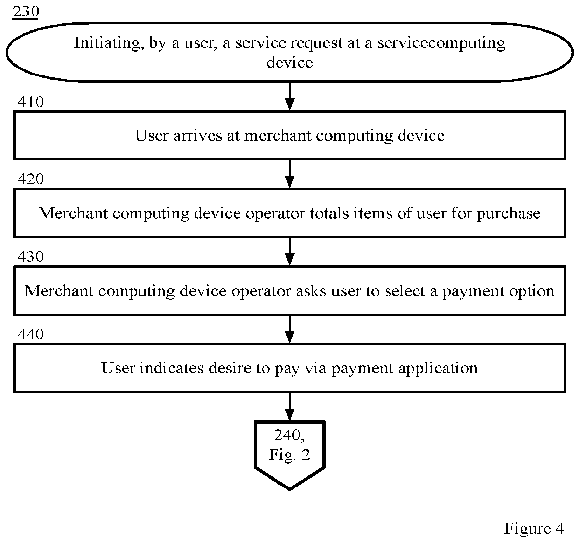

Returning to Figure 2, in block 230, the user 101 initiates a payment transaction at the merchant computing device 130. The method for initiating, by a user 101, a payment transaction at a merchant computing device 130 is described in more detail hereinafter with reference to the method described in Figure 4.

Figure 4 is a block diagram depicting a method 230 for initiating, by a user 101, a payment transaction at a merchant computing device 130, in accordance with certain examples. The method 230 is described with reference to the components illustrated in Figure 1.

In block 410, the user 101 arrives at the merchant computing device 130. In an example, at a time prior to approaching the merchant computing device 130, the user 101 browses the merchant system location and selects one or more items to purchase. In this example, the user 101 may collect the one or more items and carry, or otherwise transport via physical basket or shopping cart, the one or more items to the merchant computing device 130. In this example, the user 101 carries or otherwise has in his possession the user computing device 110.

In block 420, the merchant computing device operator 102 totals items of the user 101 for purchase. In an example, the merchant computing device operator 102 scans barcodes associated with the one or more items of the user 101 or otherwise enters information associated with the items into the merchant computing device 130.

In block 430, the merchant computing device operator 102 asks the user 101 to select a payment option. In an example, the merchant computing device 130 displays one or more payment options that the user 101 may select to process a payment transaction. Example payment options comprise payment via a payment application 133 associated with the payment processing system 140 with which both the user 101 and the merchant system have created an account, payment by cash, payment by check, payment by credit card, payment by debit card, and/or any other acceptable means of payment. In an example, the one or more payment options are displayed as objects on the user interface 131. In an example, the one or more payment options are selectable by the merchant computing device operator 102 in response to the user's 101 direction. In an example, the merchant computing device operator 102 asks the user 101 if the user 101 wishes to conduct a transaction using the account of the user 101 associated with the payment processing system 140.

In block 440, the user 101 indicates a desire to pay via the payment application 133. For example, the user 101 directs the merchant computing device operator 102 to initiate a transaction via the payment application 133 by selecting the payment option displayed on the user interface 131 associated with payment via the payment processing system 140.

From block 440, the method 230 proceeds to block 240 in Figure 2.

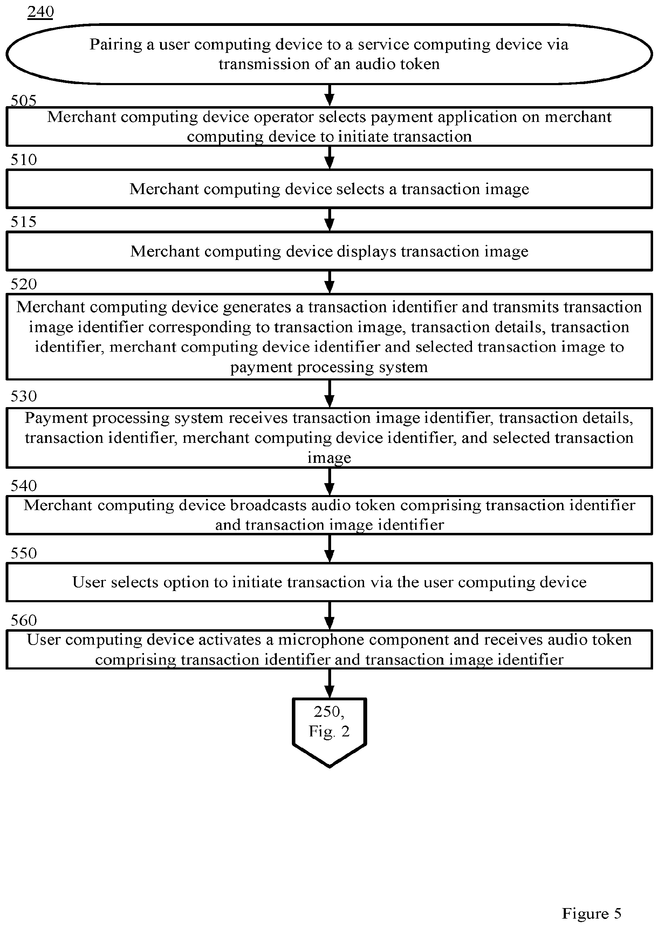

Returning to Figure 2, in block 240, the user computing device 110 is paired to the merchant computing device 130 and the transaction is processed. Methods for pairing a user computing device 110 to a service computing device 130 are described in more detail hereinafter with reference to the methods described in Figure 5.

Figure 5 is a block diagram depicting a method 240 for pairing a user computing device 110 to a service computing device 130, in accordance with certain examples. The method 240 is described with reference to the components illustrated in Figure 1.

In block 505, the merchant computing device operator 102 selects the payment application 133 on the merchant computing device 130 to initiate a transaction. In an example, in response to receiving a verbal request from the user 101 to select the payment application 133 as a payment option, the merchant computing device operator 102 actuates an object on the user interface 131 of the merchant computing device 130 corresponding to the payment application 133 as a payment option.

In block 510, the merchant computing device 130 selects a transaction image. In an example, the merchant computing device 130 randomly selects the transaction image from one or more stored transaction images. In another example, in response to receiving an input of the selection of the payment application 133 as the selected payment option for the transaction, the merchant computing device 130 displays one or more transaction images on the user interface 131 for selection by the merchant computing device operator 102. For example, the transaction images comprise one or more images, for example, an image of a tree, an image of a baseball, an image of a cat, an image of a clock, among other images. In another example, the merchant computing device 130 displays a default transaction image. In this example, the user interface 131 displays the default transaction image and the merchant computing device operator 102 does not need to select the default transaction image. In another example, instead of displaying one or more images for selection by the merchant computing device operator 102, the merchant computing device 130 displays a predetermined or randomly generated string of alphanumeric and/or symbolic characters, for example, the merchant computing device 130 displays the alphanumeric and symbolic characters "AM34#T" on the user interface 131 of the merchant computing device 130. For example, the merchant computing device 130 generates the sequence alphanumeric and/or symbolic characters and displays the alphanumeric and displays the sequence on the user interface 131.

In block 515, the merchant computing device displays the transaction image. In an example, the merchant computing device 130 displays the selected transaction image. For example, in response to receiving the input of the selection of the transaction image from the one or more displayed transaction images, the merchant computing device 130 displays the selected transaction image on the user interface 131. In an example, the merchant computing device 130 displays the transaction image for a predetermined period of time, for example, the merchant computing device 130 displays the transaction image for 30 seconds, for a minute, for 3 minutes, or for another appropriate predetermined period of time.

In block 520, the merchant computing device 130 generates a transaction identifier. The merchant computing device 130 transmits a transaction image identifier that corresponds to the transaction image, transaction details, the transaction identifier, and a merchant computing device 130 identifier to the payment processing system 140. In an example, the merchant computing device 130 generates the transaction identifier via a random number generator of the payment application 133. In an example, the transaction identifier comprises a string of alphanumeric and/or symbolic characters. In an example, transaction details comprise a total amount for the transaction and/or a listing of the one or more items being purchased by the user 101. In an example, the merchant computing device 130 identifier comprises a media access control ("MAC") address, hardware identifier, or other identifier associated with the merchant computing device 130. In this example, the payment processing system 140 can identify the merchant system account based on the merchant computing device 130 identifier. In an example, the merchant computing device 130 transmits the transaction details, the transaction identifier, the transaction image identifier, and the merchant computing device 130 identifier to the payment processing system 140 via the network 120. In an example, the merchant computing device 130 transmits the transaction identifier corresponding to the transaction image displayed on the merchant computing device 130 to the payment processing system 140 via the network 120. In another example, the merchant computing device 130 transmits a transaction image identifier associated with the transaction image displayed on the merchant computing device 130 to the payment processing system 140 via the network 120

In block 530, the payment processing system 140 receives the transaction image identifier, the transaction details, the transaction identifier, and the merchant computing device 130 identifier. For example, the payment processing system 140 receives the transaction image identifier corresponding to the transaction image selected by the user 101 or the default transaction image displayed on the merchant computing device 130, the transaction details, the transaction identifier, and the merchant computing device 130 identifier via the network 120. In an example, the payment processing system 140 receives the transaction image instead of the transaction image identifier corresponding to the transaction image. For example, the transaction identifier is a random number generated by the merchant computing device 130 and transmitted along with the transaction image identifier, the merchant computing device 130 identifier and transaction details comprising the total amount of the transaction for the one or more items being purchased by the user 101. In an example, the payment processing system 140 identifies a merchant system account identifier associated with the merchant system based on the merchant computing device 130 identifier. For example, the payment processing system 140, at the time the merchant system creates an account with the payment processing system 140, associates the merchant computing device 130 identifier with an account identifier associated with the merchant system account and stores the information in a database or data storage unit 145 accessible to the payment processing system 140. In this example, upon receiving the transaction image identifier, the merchant computing device 130 identifier, the transaction details, and the transaction identifier, the payment processing system 140 identifies the merchant system account identifier by accessing the database and extracting the merchant system account identifier associated with the merchant computing device 130 identifier. In an example, the payment processing system 140 stores the transaction image identifier, the transaction identifier, the merchant system account identifier, and the transaction details in a database or in the data storage unit 146 accessible to the payment processing system 140. In this example, the payment processing system 140 may associate the transaction identifier with the transaction image identifier, the merchant system account identifier, and the transaction details, for example, by storing the data in a table or other format in a data storage unit 145 accessible to the payment processing system 140.

In block 540, the merchant computing device 130 broadcasts an audio token comprising the transaction identifier and a transaction image identifier. In an example, in response to receiving an input of a selection of a transaction image, the merchant computing device 130 displays the selected transaction image and transmits the audio token for a predetermined period of time. For example, the merchant computing device 130 displays the transaction image and transmits the audio token comprising the transaction identifier and the transaction image identifier for a predetermined period of time, for example, for 30 seconds, one minute, 3 minutes, or other appropriate predetermined period of time. In another example, the merchant computing device 130 transmits a transaction image instead of the transaction image identifier. For example, the merchant computing device 130 previously transmitted the transaction image and the transaction identifier along with transaction details to the payment processing system 140 via the network 120. In an example, the merchant computing device 130 broadcasts the audio token via an ultrasound communication or audible sound communication.

In an example, the audio token does not comprise a transaction identifier but instead comprises other data such as files, images, text, applications, or other data. In an example, where the merchant computing device 130 operator does not select a transaction image and the merchant computing device 130 displays a default transaction image, the merchant computing device 130 or second computing device broadcasts the audio token in response to receiving an input via the user interface 131. For example, the input comprises a selection, via the user interface 131 by the operator of the merchant computing device 130 of an option to initiate a transaction or to initiate a transfer of data. In certain examples, the merchant computing device 130 does not transmit the transaction image or transaction image identifier to the user computing device 110.

In block 550, the user 101 selects an option to initiate the transaction via the user computing device 110. In an example, the user 101 selects an option to initiate the transaction at the same time as, prior to, or subsequent to a time at which the merchant computing device operator 102 selects the transaction image on the merchant computing device 130. For example, the user 101 selects an object on the user interface 111 displayed by the payment application 113 that reads "initiate transaction."

In block 560, the user computing device 110 activates a microphone component 119 and receives the audio token broadcast by the merchant computing device 130. An example audio toke comprises the transaction identifier and the transaction image identifier. In an example, in response to receiving an input of a selection of the option to initiate a transaction via the user interface 111 of the user computing device 110, the user computing device 110 activates the microphone component 119 to listen for audio tokens broadcast by nearby computing devices. In an example, the user computing device 110 logs a timestamp, activates the microphone component 119, and instructs the microphone component 119 to listen for audio tokens until a predefined threshold length of time from the time indicated on the second timestamp passes. For example, the predetermined threshold length of time for listening for audio tokens comprises thirty seconds, one minute, three minutes, or another appropriate predetermined length of time. In an example, after the threshold length of time passes, the user computing device 110 deactivates the microphone component 119 or otherwise instructs the microphone component 119 to cease listening for audio tokens broadcast by nearby computing devices. In an example, the user computing device 110 receives the audio token broadcast by the merchant computing device 130 via ultrasound or audible sound communication at the merchant system location via the microphone component 119.

In an example, the user computing device 110 receives the audio token comprising the transaction identifier. For example, the microphone component 119 receives the audio token broadcast by the merchant computing device 130 via ultrasound communication or audible sound communication and transmits the received audio token to the payment application 113 of the user computing device 110. For example, the received audio token comprises the transaction image identifier and transaction identifier previously transmitted by the merchant computing device 130 to the payment processing system 140. In an example, the payment application 113 extracts the transaction identifier and the transaction image identifier from the received audio token. In another example, the payment application 113 extracts the transaction image.

From block 560, the method 240 proceeds to block 250 in Figure 2.

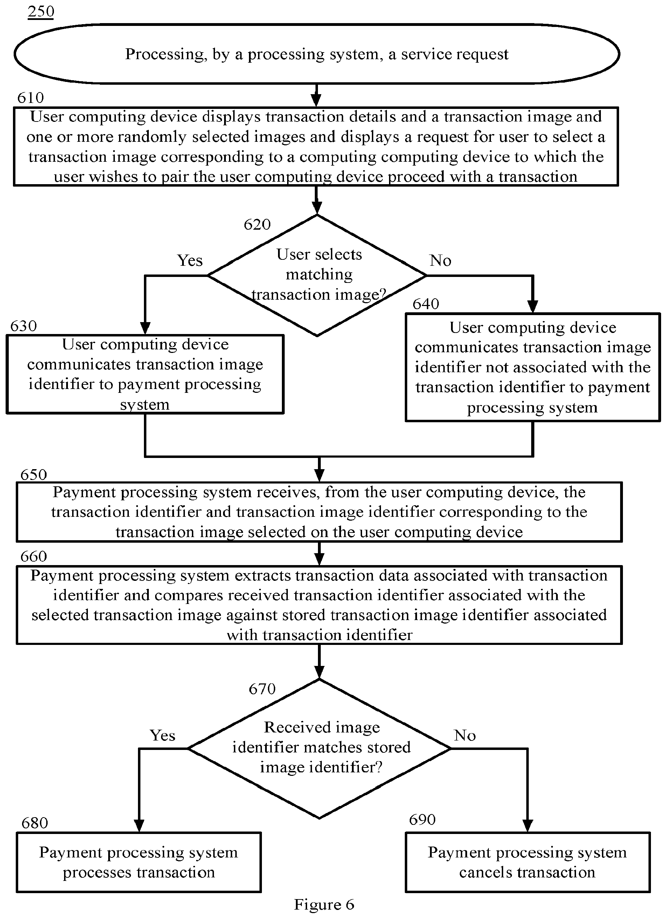

Returning to Figure 2, in block 250, the payment processing system 140 processes a service request. Methods for processing, by a processing system 140, a service request are described in more detail hereinafter with reference to the methods described in Figure 6.

Figure 6 is a block diagram depicting a method 250 for processing, by a processing system 140, a service request, in accordance with certain examples. The method 250 is described with reference to the components illustrated in Figure 1.

In block 610, the user computing device 110 displays the transaction details, the transaction image, and one or more randomly selected images with a request for the user 101 to select a displayed transaction image corresponding to the computing device with which the user 101 wishes to pair to proceed with the transaction. For example, the user computing device 110 comprises two or more stored transaction images including at least the transaction image or transaction image identified by a transaction image identifier received from the merchant computing device 130 in the audio token. In an example, the user computing device 110 displays on the user interface 111 the transaction image corresponding to the received transaction image identifier and the one or more other transaction images. In an example, the user computing device 110 receives a transaction image identifier in the audio token received from the merchant computing device 130, extracts the transaction image corresponding to the transaction image identifier, and displays the transaction image along with the one or more other transaction images stored on the user computing device 110. In another example, the user computing device 110 displays a default set of transaction images comprising at least the transaction image displayed on the merchant computing device 130. In an example, the user computing device 110 displays transaction details so that the user 101 may decide whether to proceed with or cancel the transaction. For example, transaction details comprise the total amount for the transaction and/or a listing of the one or more items being purchased by the user 101. For example, the user computing device 110 displays transaction details reading "Regular coffee $3.50, Doughnut $1.10, Sales tax $.50, transaction total = $5.10." In another example, the transaction details displayed by the user computing device 110 read "transaction total = $5.10."

In block 620, the user 101 either selects, via the user computing device 110, the transaction image that is displayed by the merchant computing device 130 and received from the merchant computing device 130 in the audio token or selects a different transaction image.

If the user 101 does not select the transaction image displayed on the user computing device 110 that matches the transaction image being displayed on the merchant computing device 130, the method 250 proceeds to block 640. In an example, the merchant computing device 130 displays a selected transaction image comprising an image of a house and the user computing device 110 displays a set of images comprising the image of the house, an image of a piano, and an image of a fish. In this example, the user 101 observes that the merchant computing device 130 displays the image of the house and selects, via the user interface 111 of the user computing device 110, the image of the fish or the image of the piano to indicate a desire not to proceed with the transaction.

In block 640, the user computing device 110 communicates a transaction image identifier not associated with the transaction identifier to the payment processing system 140. For example, the payment processing system 140 previously received the transaction identifier along with the transaction image identifier selected via the merchant computing device 130 (or the default transaction image identifier) from the merchant computing device 130 and associated the received transaction identifier with the transaction image identifier. In this example, the payment processing system 140 previously associated the received transaction identifier with the transaction image identifier received from the merchant computing device 130.

In an example, in response to receiving an input of the selection of the transaction image, the user computing device 110 communicates the transaction image identifier associated with the selected transaction image and received transaction identifier to the payment processing system 140 via the network 120. In an example, the user computing device 110 transmits a user computing device 110 identifier or user 101 account identifier along with the transaction image identifier associated with the selected transaction image and the transaction identifier. In an example, the payment processing system 140 receives the transaction image identifier corresponding to the transaction image selected by the user 101, the transaction identifier, the user computing device 110 identifier, and/or the user 101 account identifier from the user computing device 110 via the network 120.

In another example, the user computing device displays a sequence of alphanumeric and/or symbolic characters and the user 101 observes the merchant computing device 130 to determine whether it displays the same sequence of alphanumeric and/or symbolic characters that matches the sequence of alphanumeric and/or symbolic characters displayed on the user computing device 110. The user 101 does not desire to proceed with the transaction initiated at that merchant computing device 130. In this example, the user computing device 110 displays at least two objects on the user interface 111, a first interface object and a second interface object. For example, the first interface object reads "confirm transaction" and the second interface object reads "cancel transaction." In an example, the user 101 selects an object on the user interface 111 to indicate a desire not to proceed with the transaction. For example, the user 101 selects an interface object reading "cancel transaction" and the user computing device 110 receives an input of the selection of the user 101 of an interface object that indicates a desire by the user 101 to cancel the transaction. In another example, the user computing device 110 displays the sequence of alphanumeric and/or symbolic characters and the user 101 does not see the merchant computing device 130 or sees a different sequence of alphanumeric and/or symbolic characters displayed on the merchant computing device 130. The user indicates a desire not to proceed with the transaction by selecting the object on the user interface 111 indicating a desire not to proceed with the transaction. In an example, the user computing device 110 communicates the input representing the desire of the user 101 not to continue with the transaction to the payment processing system 140 via the network 120.

From block 640, the method 250 proceeds to block 650.

Returning to block 620, if the user 101 selects, via the user interface 111, the transaction image displayed on the user computing device 110 that matches the transaction image being displayed by the merchant computing device 130, the method 250 proceeds to block 630.

In block 630, the user computing device 110 communicates the transaction image identifier to the payment processing system 140. For example, the user 101 wishes to proceed with the transaction. In an example, the merchant computing device 130 displays a selected transaction image comprising an image of a house. The user computing device 110 displays a set of images comprising the image of the house, an image of a piano, and an image of a fish. In this example, the user 101 observes that the merchant computing device 130 displays the image of the house and selects, via the user interface 111 of the user computing device 110, the image of the house corresponding to the image of the house displayed by the merchant computing device 130 to indicate a desire to proceed with the transaction. In an example, the user computing device 110 transmits a user computing device 110 identifier or user 101 account identifier along with the transaction image identifier corresponding to the selected transaction image and the transaction identifier to the payment processing system 140 via the network 120. In an example, the payment processing system 140 receives the transaction image selected by the user 101, the transaction identifier, the user computing device 110 identifier, and/or the user 101 account identifier from the user computing device 110 via the network 120.

In another example, the user computing device 110 displays a sequence of alphanumeric and/or symbolic characters and the user 101 observes the merchant computing device 130 displays the same sequence of alphanumeric and/or symbolic characters that matches the sequence of alphanumeric and/or symbolic characters displayed on the user computing device 110. The user 101 desires to proceed with the transaction initiated at that merchant computing device 130. In this example, the user computing device 110 displays at least two objects on the user interface 111, a first interface object and a second interface object. For example, the first interface object reads "confirm transaction" and the second interface object reads "cancel transaction." In an example, the user 101 selects an object on the user interface 111 to indicate a desire to proceed with the transaction. For example, the user 101 selects an interface object reading "confirm transaction" and the user computing device 110 receives an input of the selection of the user 101 of an interface object that indicates a desire by the user 101 to proceed with the transaction. In an example, the user computing device 110 communicates the input representing the desire of the user 101 to continue with the transaction to the payment processing system 140 via the network 120.

In block 650, the payment processing system 140 receives, from the user computing device 110, the transaction identifier and the transaction image identifier corresponding to the transaction image selected on the user computing device 110. For example, the payment processing system 140 receives, from the user computing device 110 via the network 120, the transaction identifier and the transaction image identifier corresponding to the transaction image selected on the user computing device 110. In an example, the payment processing system 140 also receives, via the network 120 from the user computing device 110, a user computing device 110 identifier or user 101 account identifier associated with the user 101 account managed by the payment processing system 140. In an example, the payment processing system 140 receives a transaction image identifier corresponding to the transaction image selected on the user computing device 110 that also corresponds to a transaction image identifier received previously from the merchant computing device 130 associated with the transaction identifier. In another example, the payment processing system 140 receives a transaction image identifier corresponding to a transaction image selected on the user computing device 110 not corresponding to a transaction image identifier received previously from the merchant computing device 130 associated with the transaction identifier. In yet another example, the payment processing system 140 receives, from the user computing device 110 via the network 120, an indication that the user 101 desires to proceed with the transaction or an indication that the user 101 desires to cancel the transaction.

In block 660, the payment processing system 140 extracts transaction data associated with transaction identifier and compares received transaction identifier associated with the selected transaction image against a stored transaction image identifier associated with transaction identifier. In an example, the received transaction image identifier received from the user computing device 110 and associated with the transaction image corresponds with the transaction image displayed on the merchant computing device 130, transmitted in the audio token, and selected by the user 101 on the user computing device 110. For example, the payment processing system 140 receives the transaction identifier and transaction image or transaction image identifier corresponding to the transaction image selected by the user 101 on the user interface 111 of the user computing device 110. In an example, the payment processing system 140. The payment processing system 140 extracts the transaction image or transaction image identifier corresponding to the transaction identifier and compares the extracted transaction image or extracted transaction image identifier to the received transaction image or received transaction image identifier.

In block 670, the payment processing system 140 determines whether the transaction image or transaction image identifier received from the user computing device 110 matches the transaction image or transaction image identifier associated with the transaction identifier previously received from the merchant computing device 130.

If the transaction image or transaction image identifier received from the user computing device 110 does not match the transaction image or transaction image identifier associated with the transaction identifier previously received from the merchant computing device 130, the method 250 proceeds to block 690.

In block 690, the payment processing system 140 cancels the transaction. For example, the payment processing system 140 transmits a notice to the merchant computing device 130 and/or user computing device 110 via the network 120 advising that the payment processing system 140 canceled the transaction. In an example, the user computing device 110 and/or merchant computing device 130 that receives the notice displays the notice. For example, the merchant computing device 130 and/or user computing device 110 displays the notice reading "transaction canceled."

Returning to block 670, if the transaction image or transaction image identifier received from the user computing device 110 via the network 120 matches the transaction image or transaction image identifier associated with the transaction identifier previously received from the merchant computing device 130 via the network 120, the method 250 proceeds to block 680.

In block 680, the payment processing system 140 processes the transaction. For example, the payment processing system 140 uses information received from the user computing device 110, received from the merchant computing device 130, and/or stored information associated with a user 101 account and/or merchant system account to process the transaction. For example, the payment processing system 140 communicates with the user computing device 110 via the network 120. In an example, the payment processing system 140 identifies the user 101 account based on the received user computing device 110 identifier or the received user 101 account identifier. In an example, the payment processing system 140 identifies transaction details associated with the received transaction identifier and a merchant system account associated with the received transaction identifier. In an example, the payment processing system 140 extracts the merchant system account identifier and the transaction details associated with the transaction identifier from a database or in the data storage unit 146 accessible to the payment processing system 140. In an example, the payment processing system 140 identifies the total amount of transaction from the transaction details and identifies a merchant system payment account associated with the merchant system account. In an example, the payment processing system 140 identifies a user 101 payment account from the user 101 account associated with the received user 101 account identifier or received user computing device 110 identifier. For example, the user 101 preconfigured a payment account to be used in transactions. In another example, the payment processing system 140 identifies two or more user 101 payment accounts from the user 101 account. The payment processing system 140 transmits payment account information associated with the two or more user 101 payment accounts to the user computing device 110 via the network 120, along with a request for the user 101 to select a payment account for use in the transaction. In this example, the user computing device 110 receives the payment account information and the request to select a payment account. The user computing device 110 displays information associated with the two or more payment accounts and provides two or more objects on the user interface 111 enabling the user 101 to select a payment account for use in the transaction. In an example, each payment account is associated with a respective user interface 111 object. In this example, the user 101 selects a user interface 111 object associated with a payment account of the user 101. The user computing device 110 transmits an indication via the network 120 of the user's 101 selection of the user interface 111 object. In this example, the payment processing system 140 receives the indication of the user's 101 selection of the payment account.

In an example, the payment processing system 140 generates a transaction authorization request and transmits, via the network 120, the transaction authorization request to an issuer system 150 associated with the payment account selected by the user 101 or the payment account extracted from the user 101 account and preconfigured for use in transactions by the user 101. In an example, the transaction authorization request comprises the total amount of the transaction associated with the transaction identifier, the merchant system payment account identifier associated with the transaction identifier, and a user 101 payment account identifier associated with the user 101 payment account selected by the user 101 or preconfigured for use by the user 101 in transactions. In an example, the issuer system 150 receives the transaction authorization request via the network 120 and either approves or denies the transaction authorization request. In an example, the issuer system 150 approves the transaction authorization request and transmits a notice of approval of the transaction authorization request to the payment processing system 140 in accordance with approving the transaction authorization request. In an example, the payment processing system 140 receives a notice of approval of the transaction authorization request from the issuer system 150 and transmits a receipt, via the network 120, to the user computing device 110 and/or the merchant computing device 130 indicating that the transaction was successfully completed and comprising the transaction details, information associated with the merchant system payment account used in the transaction, and/or information associated with the user 101 payment account used in the transaction. In another example, the payment processing system 140 receives a notice of denial of the transaction authorization request from the issuer system 150 and transmits a receipt, via the network 120, to the user computing device and/or to the merchant computing device 130 indicating that the transaction authorization was denied. In an example, the user computing device 110 receives, via the network 120, the receipt information indicating a transaction authorization request approval or a transaction authorization request denial and displays all or part of the receipt information via the user interface 111 of the user computing device. In an example, the merchant computing device 130 receives, via the network 120, the receipt information indicating a transaction authorization request approval or a transaction authorization request denial and displays all or part of the receipt information via the user interface 131 of the merchant computing device 130.

### Additional Examples

In an example, a first user computing device 110-1 is paired to a second user computing device 110-2 and data is transferred and/or shared between the first user computing device 110-1 and the second user computing device 110-2 over the network 120 via the payment processing system 140. For example, an operator 102 of the second user computing device 110-2 selects an application 133 on the second user computing device 110-2 to initiate a transfer of data. For example, the operator of the second user computing device 110-2 desires to send data to or receive data from the first user computing device 110-1. The data may comprise files, images, text, applications, and/or any other transferrable data. In an example, the user of the second user computing device 110-2 inputs a selection, via the user interface of the second user computing device 110-2, of one or more images, text, videos, or other files to transfer to the first user computing device 110-1.

The second user computing device 110-2 broadcasts an audio token via ultrasound communication or audible sound communication, comprising a second user computing device 110-2 identifier and a transaction image. In this example, the transaction image is also displayed on the second user computing device 110-2. The second user computing device 110-2 generates an identifier and transmits data transfer request details, a data transfer request identifier, the displayed transaction image, and a second computing device 110-2 identifier to a processing system 140. The data transfer request details may comprise the selection, by the user of the second computing device 110-2, of the one or more images, text, videos, or other files the user desires to transfer to the first user computing device. The processing system 140 receives the data transfer request details, the data transfer request identifier, the transaction image, and the second computing device identifier.

An operator 101 of the first user computing device 110-1 selects an application on the first user computing device 110-1 and an option to initiate a data transfer. In an example, in response to receiving an input of a selection of the option to initiate a data transfer, the application on the first user computing device 110-1 activates a microphone component 119 of the first user computing device 110-1. In an example, the first user computing device 110-1 receives the audio token broadcast by the audio component of the second user computing device 110-2 via the microphone component 119 of the first user computing device 110-1. In an example, the first user computing device 110-1 displays the received transaction image received in the audio token. In this example, the user 101 of the first user computing device 110-1 views that the transaction image is displayed on both the second user computing device 110-2 and the first user computing device 110-1 to verify that the correct two user computing devices are being paired. In this example, the user 101 of the first user computing device 110-1 selects the transaction image displayed on the second user computing device 110-2 among a group of displayed images comprising at least the transaction image to confirm the transaction. In another example, the user 101 of the of the first user computing device 110-1 selects an image other than the displayed transaction image on the first user computing device 110-1 to cancel the transaction. In an example, in response to receiving an input of a selection a transaction image, the first user computing device 110-1 transmits, via the network, the transaction image, the second computing device 110-2 identifier, and a first user computing device 110-1 identifier to a processing system 140. In an example, the first computing device 110-1 and the second computing device 110-2 communicate via the processing system 140 to transfer data from the first user computing device 110-1 to the second user computing device 110-2 or from the second user computing device 110-2 to the first user computing device 110-1.

In an example the payment processing system 140 determines whether the transaction image received from the first user computing device 110-1 corresponds to the transaction image received from the second user computing device 110-2. In an example, if the transaction images do not match, the payment processing system 140 transmits a notice of cancellation of data transfer to the first user computing device 110-1 and/or the second user computing device 110-2 and the first user computing device 110-1 and/or the second user computing device 110-2 displays the received notice of cancellation of the data transfer.

In an example, if the transaction images match, the payment processing system 140 facilitates the transfer of data from the first user computing device 110-1 to the second user computing device 110-2 via the network 120 or from the second computing device 110-2 to the first user computing device 110-1 via the network 120. In an example, the first user computing device 110-1 receives data via the payment processing system 140 from the second user computing device 110-2. In another example, the user 101 of the first user computing device 110-1 inputs a selection, via the user interface 111 of the first user computing device 110-1, of one or more images, text, videos, or other files stored on the first user computing device 110-1 to transfer to the second user computing device 110-2 via the processing system 140. In this example, in response to receiving the input, the first user computing device 110-1 transmits the selected files via the network 120 to the payment processing system 140, which retransmits the selected files to the second user computing device 110-2 via the network 120. In other examples, the first user computing device 110-1 and the second user computing device 110-2 establish a wireless network connection at the merchant location and transmit and/or receive data over the wireless network connection.

### Other Examples

Figure 7 depicts a computing machine 2000 and a module 2050 in accordance with certain examples. The computing machine 2000 may correspond to any of the various computers, servers, mobile devices, embedded systems, or computing systems presented herein. The module 2050 may comprise one or more hardware or software elements configured to facilitate the computing machine 2000 in performing the various methods and processing functions presented herein. The computing machine 2000 may include various internal or attached components such as a processor 2010, system bus 2020, system memory 2030, storage media 2040, input/output interface 2060, and a network interface 2070 for communicating with a network 2080.

The computing machine 2000 may be implemented as a conventional computer system, an embedded controller, a laptop, a server, a mobile device, a smartphone, a set-top box, a kiosk, a router or other network node, a vehicular information system, one more processors associated with a television, a customized machine, any other hardware platform, or any combination or multiplicity thereof. The computing machine 2000 may be a distributed system configured to function using multiple computing machines interconnected via a data network or bus system.

The processor 2010 may be configured to execute code or instructions to perform the operations and functionality described herein, manage request flow and address mappings, and to perform calculations and generate commands. The processor 2010 may be configured to monitor and control the operation of the components in the computing machine 2000. The processor 2010 may be a general purpose processor, a processor core, a multiprocessor, a reconfigurable processor, a microcontroller, a digital signal processor ("DSP"), an application specific integrated circuit ("ASIC"), a graphics processing unit ("GPU"), a field programmable gate array ("FPGA"), a programmable logic device ("PLD"), a controller, a state machine, gated logic, discrete hardware components, any other processing unit, or any combination or multiplicity thereof The processor 2010 may be a single processing unit, multiple processing units, a single processing core, multiple processing cores, special purpose processing cores, coprocessors, or any combination thereof. According to certain embodiments, the processor 2010 along with other components of the computing machine 2000 may be a virtualized computing machine executing within one or more other computing machines.

The system memory 2030 may include non-volatile memories such as read-only memory ("ROM"), programmable read-only memory ("PROM"), erasable programmable read-only memory ("EPROM"), flash memory, or any other device capable of storing program instructions or data with or without applied power. The system memory 2030 may also include volatile memories such as random access memory ("RAM"), static random access memory ("SRAM"), dynamic random access memory ("DRAM"), and synchronous dynamic random access memory ("SDRAM"). Other types of RAM also may be used to implement the system memory 2030. The system memory 2030 may be implemented using a single memory module or multiple memory modules. While the system memory 2030 is depicted as being part of the computing machine 2000, one skilled in the art will recognize that the system memory 2030 may be separate from the computing machine 2000 without departing from the scope of the subject technology. It should also be appreciated that the system memory 2030 may include, or operate in conjunction with, a non-volatile storage device such as the storage media 2040.

The storage media 2040 may include a hard disk, a floppy disk, a compact disc read only memory ("CD-ROM"), a digital versatile disc ("DVD"), a Blu-ray disc, a magnetic tape, a flash memory, other non-volatile memory device, a solid state drive ("SSD"), any magnetic storage device, any optical storage device, any electrical storage device, any semiconductor storage device, any physical-based storage device, any other data storage device, or any combination or multiplicity thereof. The storage media 2040 may store one or more operating systems, application programs and program modules such as module 2050, data, or any other information. The storage media 2040 may be part of, or connected to, the computing machine 2000. The storage media 2040 may also be part of one or more other computing machines that are in communication with the computing machine 2000 such as servers, database servers, cloud storage, network attached storage, and so forth.

The module 2050 may comprise one or more hardware or software elements configured to facilitate the computing machine 2000 with performing the various methods and processing functions presented herein. The module 2050 may include one or more sequences of instructions stored as software or firmware in association with the system memory 2030, the storage media 2040, or both. The storage media 2040 may therefore represent examples of machine or computer readable media on which instructions or code may be stored for execution by the processor 2010. Machine or computer readable media may generally refer to any medium or media used to provide instructions to the processor 2010. Such machine or computer readable media associated with the module 2050 may comprise a computer software product. It should be appreciated that a computer software product comprising the module 2050 may also be associated with one or more processes or methods for delivering the module 2050 to the computing machine 2000 via the network 2080, any signal-bearing medium, or any other communication or delivery technology. The module 2050 may also comprise hardware circuits or information for configuring hardware circuits such as microcode or configuration information for an FPGA or other PLD.

The input/output ("I/O") interface 2060 may be configured to couple to one or more external devices, to receive data from the one or more external devices, and to send data to the one or more external devices. Such external devices along with the various internal devices may also be known as peripheral devices. The I/O interface 2060 may include both electrical and physical connections for operably coupling the various peripheral devices to the computing machine 2000 or the processor 2010. The I/O interface 2060 may be configured to communicate data, addresses, and control signals between the peripheral devices, the computing machine 2000, or the processor 2010. The I/O interface 2060 may be configured to implement any standard interface, such as small computer system interface ("SCSI"), serial-attached SCSI ("SAS"), fiber channel, peripheral component interconnect ("PCI"), PCI express (PCIe), serial bus, parallel bus, advanced technology attached ("ATA"), serial ATA ("SATA"), universal serial bus ("USB"), Thunderbolt, FireWire, various video buses, and the like. The I/O interface 2060 may be configured to implement only one interface or bus technology. Alternatively, the I/O interface 2060 may be configured to implement multiple interfaces or bus technologies. The I/O interface 2060 may be configured as part of, all of, or to operate in conjunction with, the system bus 2020. The I/O interface 2060 may include one or more buffers for buffering transmissions between one or more external devices, internal devices, the computing machine 2000, or the processor 2010.

The I/O interface 2060 may couple the computing machine 2000 to various input devices including mice, touch-screens, scanners, electronic digitizers, sensors, receivers, touchpads, trackballs, cameras, microphones, keyboards, any other pointing devices, or any combinations thereof. The I/O interface 2060 may couple the computing machine 2000 to various output devices including video displays, speakers, printers, projectors, tactile feedback devices, automation control, robotic components, actuators, motors, fans, solenoids, valves, pumps, transmitters, signal emitters, lights, and so forth.

The computing machine 2000 may operate in a networked environment using logical connections through the network interface 2070 to one or more other systems or computing machines across the network 2080. The network 2080 may include wide area networks (WAN), local area networks (LAN), intranets, the Internet, wireless access networks, wired networks, mobile networks, telephone networks, optical networks, or combinations thereof. The network 2080 may be packet switched, circuit switched, of any topology, and may use any communication protocol. Communication links within the network 2080 may involve various digital or an analog communication media such as fiber optic cables, free-space optics, waveguides, electrical conductors, wireless links, antennas, radio-frequency communications, and so forth.

The processor 2010 may be connected to the other elements of the computing machine 2000 or the various peripherals discussed herein through the system bus 2020. It should be appreciated that the system bus 2020 may be within the processor 2010, outside the processor 2010, or both. According to certain examples, any of the processor 2010, the other elements of the computing machine 2000, or the various peripherals discussed herein may be integrated into a single device such as a system on chip ("SOC"), system on package ("SOP"), or ASIC device.

In situations in which the systems discussed here collect personal information about users, or may make use of personal information, the users may be provided with an opportunity or option to control whether programs or features collect user information (e.g., information about a user's social network, social actions or activities, profession, a user's preferences, or a user's current location), or to control whether and/or how to receive content from the content server that may be more relevant to the user. In addition, certain data may be treated in one or more ways before it is stored or used, so that personally identifiable information is removed. For example, a user's identity may be treated so that no personally identifiable information can be determined for the user, or a user's geographic location may be generalized where location information is obtained (such as to a city, ZIP code, or state level), so that a location of a user cannot be determined. Thus, the user may have control over how information is collected about the user and used by a content server.

Embodiments may comprise a computer program that embodies the functions described and illustrated herein, wherein the computer program is implemented in a computer system that comprises instructions stored in a machine-readable medium and a processor that executes the instructions. However, it should be apparent that there could be many different ways of implementing embodiments in computer programming, and the embodiments should not be construed as limited to any one set of computer program instructions. Further, a skilled programmer would be able to write such a computer program to implement an embodiment of the disclosed embodiments based on the appended flow charts and associated description in the application text. Therefore, disclosure of a particular set of program code instructions is not considered necessary for an adequate understanding of how to make and use embodiments. Further, those skilled in the art will appreciate that one or more aspects of embodiments described herein may be performed by hardware, software, or a combination thereof, as may be embodied in one or more computing systems. Moreover, any reference to an act being performed by a computer should not be construed as being performed by a single computer as more than one computer may perform the act.

The examples described herein can be used with computer hardware and software that perform the methods and processing functions described herein. The systems, methods, and procedures described herein can be embodied in a programmable computer, computer-executable software, or digital circuitry. The software can be stored on computer-readable media. For example, computer-readable media can include a floppy disk, RAM, ROM, hard disk, removable media, flash memory, memory stick, optical media, magneto-optical media, CD-ROM, etc. Digital circuitry can include integrated circuits, gate arrays, building block logic, field programmable gate arrays (FPGA), etc.

The example systems, methods, and acts described in the embodiments presented previously are illustrative, and, in alternative embodiments, certain acts can be performed in a different order, in parallel with one another, omitted entirely, and/or combined between different examples, and/or certain additional acts can be performed.

Although specific embodiments have been described above in detail, the description is merely for purposes of illustration. It should be appreciated, therefore, that many aspects described above are not intended as required or essential elements unless explicitly stated otherwise. Modifications of the disclosed aspects of the examples, in addition to those described above, can be made by a person of ordinary skill in the art, having the benefit of the present disclosure, without departing from scope of embodiments defined in the following claims.

## Claims

1. A computer-implemented method (200) for processing service requests based on information associated with computing devices that communicate via audio communication channels, comprising:
receiving (240, 560), by a user computing device (110) and from a service computing device (130), an audio token via an audio communication channel comprising a first service request identifier and a first image identifier;
displaying (250, 610), by the user computing device (110), a stored image corresponding to the first image identifier and one or more other images,
receiving (250, 620), by the user computing device (110), a second input comprising a selection of the stored image corresponding to the first image identifier;
transmitting (250, 630), by the user computing device (110) and to one or more computing devices (140), the service request identifier, the first image identifier corresponding to the selected image, and a user account identifier associated with the user computing device (110);
receiving (240, 520), by the one or more computing devices (140) and from the service computing device (130), a second service request identifier, a second service computing device identifier, and a second image identifier corresponding to a second image displayed by the service computing device (130), the displayed second image corresponding to the first image identifier and being randomly selected for display by the service computing device (130) out of a plurality of stored images;
receiving (250, 650), by the one or more computing devices (140) and from the user computing device (110), the service request identifier, the first image identifier corresponding to the stored image, and the user account identifier associated with the user computing device;
determining (250, 670), by the one or more computing devices (140), that the second image identifier and the second service request identifier received from the service computing device (130) matches the first image identifier and the first service request identifier received from the user computing device (110), respectively;
in response to determining that the second image identifier and second service request identifier received from the service computing device (130) matches the first image identifier and first service request identifier received from the user computing device (110), retrieving user account information associated with the user account identifier received from the user computing device (110) and service account information associated with the service computing device identifier received from the service computing device (130); and
processing (250, 680), by the one or more computing devices (140), the service request associated with the service request identifier based on the user account information and the service account information.

2. The method of claim 1, further comprising:
receiving (240, 550), by the user computing device (110), an input of a selection of an application; and
activating (240, 560), by the user computing device (110), a microphone component (119) of the first user computing device (110) in response to receiving the input of the selection of the application, wherein the user computing device (110) receives the audio token transmitted from the service computing device (130) via the activated microphone component (119).

3. The method of claim 1, wherein the service computing device (130) transmits the audio token to the user computing device (110) via an ultrasound communication channel.

4. The method of claim 1, wherein the service computing device (130) transmits the audio token to the user computing device (110) via an audible sound communication channel.

5. The method of claim 1, further comprising transmitting, by the service computing device (130), data to the one or more computing devices (140), wherein the one or more computing devices (140) retransmits the data to the user computing device (110).

6. The method of claim 1, wherein the service request associated with the service request identifier comprise a merchant financial account identifier associated with a merchant system payment account, wherein the one or more computing devices (140) extracts a user financial account identifier associated with a user payment account, and wherein processing (250, 680) the service request comprises communicating with an issuer system (150) associated with the user financial account identifier to process a financial transaction between the user payment account and the merchant payment account.

7. The method of claim 1, further comprising:
receiving (240, 505), by the service computing device (130), a first input;
in response to receiving the first input, generating (240, 520), by the service computing device (130), the service request identifier and displaying (240, 515) an image;
transmitting (240, 520), by the service computing device (130) and to one or more computing devices (140), the service request identifier and the image identifier associated with the displayed image;
broadcasting (240, 540), via an audio component (138) of the service computing device (130), the audio token, the audio token comprising the service request identifier and the image identifier associated with the displayed image,
wherein receiving (240, 560), by the user computing device (110), the audio token comprises receiving the audio token broadcast by the service computing device (130).

8. The method of claim 7, wherein the first input comprises an input of a selection of data stored on the service computing device (130), wherein details of the service request comprise the selected data, wherein the one or more computing devices (140) extracts a user financial account identifier associated with a user payment account, and wherein processing (250, 680) the service request comprises communicating the selected data to the user computing device (110).

9. A computer program product, comprising a non-transitory computer-readable medium having computer-executable program instructions embodied thereon that when executed by a computing device cause the computing device to process service requests based on information associated with computing devices that communicate via audio communication channels in accordance with the method of any one of claims 1 to 8.

10. A system (100) for processing service requests based on information associated with computing devices that communicate via audio communication channels, comprising:
a service computing device (130);
a second computing device (110);
one or more computing devices (140); a storage device;
an audio component (118); and
a processor communicatively coupled to the storage device, wherein the processor executes application code instructions that are stored in the storage device to cause the system (100) to:
receive (240, 560) an audio token over an audio communication channel via the audio component (118) comprising a service request identifier, service request details, and an image identifier corresponding to an image displayed by the service computing device (130) transmitting the audio token, the displayed image being randomly selected for display by the service computing device (130) out of a plurality of stored images;
display (250, 610), by the second computing device (110), one or more service request details, an image corresponding to the image identifier, and one or more other images;
receive (250, 620), by the second computing device (110), a second input comprising a selection of the displayed image corresponding to the image identifier; and
transmit (250, 630), in response to receiving the second input, by the second computing device (110) and to the one or more computing devices (140), the service request identifier, the image identifier, and a user account identifier, wherein the one or more computing devices (140) is configured to process a service request based on transaction details received from the service computing device (130) that are associated with the service request identifier and based on user account information associated with the user account identifier.

11. The system of claim 10, wherein the service computing device (130) is configured to receive (240, 505) a first input, wherein in response to receiving the input, the service computing device (130) is configured to generate (240, 520) a service request identifier and display an image; wherein the service computing device (130) transmits (240, 520), to one or more computing devices (140), the transaction details, the service request identifier and an image identifier associated with the displayed image; and wherein the service computing device (130) is configured to broadcast the audio token via an audio component (138) of the first computing device (130) comprising the transaction identifier and the image identifier.

12. The system of claim 10, wherein the processor is further configured to execute application code instructions that are stored in the storage device to cause the system to:
receive (240, 550) an input of a selection of an application; and
activate (240, 560) a microphone component (119) of the second computing device (110) in response to receiving the input of the selection of the application; and
receive (240, 560) the audio token via the activated microphone component (119).

13. The system claim 10, wherein the audio token is received via ultrasound communication or audible sound communication.

## Patentansprüche

1. Computerimplementiertes Verfahren (200) zum Verarbeiten von Dienstanfragen basierend auf Informationen, die mit Computergeräten assoziiert sind, welche über Audiokommunikationskanäle kommunizieren, umfassend:
Empfangen (240, 560) durch ein Benutzer-Computergerät (110) und von einem Dienste-Computergerät (130) eines Audiotokens über einen Audiokommunikationskanal, der eine erste Diensteanfragekennung und eine erste Bildkennung umfasst;
Anzeigen (250, 610) eines gespeicherten Bildes, das der ersten Bildkennung entspricht, und eines oder mehrerer anderer Bilder durch das Benutzer-Computergerät (110),
Empfangen (250, 620) einer zweiten Eingabe durch das Benutzer-Computergerät (110), umfassend eine Auswahl des gespeicherten Bildes, das der ersten Bildkennung entspricht;
Übertragen (250, 630), durch das Benutzer-Computergerät (110) und an ein oder mehrere Computergeräte (140), der Dienstanfragekennung, der ersten Bildkennung, die dem ausgewählten Bild entspricht, und einer Benutzerkontokennung, die mit dem Benutzer-Computergerät (110) assoziiert ist;
Empfangen (240, 520), durch das eine oder die mehreren Computergeräte (140) und von dem Service-Computergerät (130), einer zweiten Dienstanfragekennung, einer zweiten Service-Computergerätekennung und einer zweiten Bildkennung, die einem zweiten Bild entspricht, das durch das Service-Computergerät (130) angezeigt wird, wobei das angezeigte zweite Bild der ersten Bildkennung entspricht und nach dem Zufallsprinzip aus einer Vielzahl gespeicherter Bilder zur Anzeige durch das Service-Computergerät (130) ausgewählt wird;
Empfangen (250, 650), durch das eine oder die mehreren Computergeräte (140) und von dem Benutzer-Computergerät (110), der Dienstanfragekennung, der ersten Bildkennung, die dem gespeicherten Bild entspricht, und der Benutzerkontokennung, die mit dem Benutzer-Computergerät assoziiert ist;
Ermitteln (250, 670) durch das eine oder die mehreren Computergeräte (140), dass die zweite Bildkennung und die zweite Dienstanfragekennung, die von dem Service-Computergerät (130) empfangen werden, jeweils mit der ersten Bildkennung und der ersten Dienstanfragekennung, die von dem Benutzer-Computergerät (110) empfangen werden, übereinstimmen;
in Reaktion auf das Ermitteln, dass die zweite Bildkennung und die zweite Dienstanfragekennung, die von dem Service-Computergerät (130) empfangen werden, mit der ersten Bildkennung und der ersten Dienstanfragekennung, die von dem Benutzer-Computergerät (110) empfangen werden, übereinstimmen, Abrufen von Benutzerkontoinformationen, die mit der Benutzerkontokennung, die von dem Benutzer-Computergerät (110) empfangen wurde, assoziiert sind, und Dienstkontoinformationen, die mit der Service-Computergerätekennung, die von dem Service-Computergerät (130) empfangen wurde, assoziiert sind; und
Verarbeiten (250, 680), durch das eine oder die mehreren Computergeräte (140), der Dienstanfrage, die mit der Dienstanfragekennung assoziiert ist, basierend auf den Benutzerkontoinformationen und den Dienstkontoinformationen.

2. Verfahren nach Anspruch 1, ferner umfassend:
Empfangen (240, 550) einer Eingabe einer Auswahl einer Anwendung durch das Benutzer-Computergerät (110); und
Aktivieren (240, 560), durch das Benutzer-Computergerät (110), einer Mikrofonkomponente (119) des ersten Benutzer-Computergeräts (110) in Reaktion auf das Empfangen der Eingabe der Auswahl der Anwendung, wobei das Benutzer-Computergerät (110) das Audiotoken empfängt, das von dem Service-Computergerät (130) über die aktivierte Mikrofonkomponente (119) übermittelt wird.

3. Verfahren nach Anspruch 1, wobei das Service-Computergerät (130) das Audio-Token über einen Ultraschall-Kommunikationskanal an das Benutzer-Computergerät (110) übermittelt.

4. Verfahren nach Anspruch 1, wobei das Service-Computergerät (130) das Audio-Token über einen hörbaren Audiokommunikationskanal an das Benutzer-Computergerät (110) übermittelt.

5. Verfahren nach Anspruch 1, ferner umfassend das Übermitteln, durch das Service-Computergerät (130), von Daten an das eine oder die mehreren Computergeräte (140), wobei das eine oder die mehreren Computergeräte (140) die Daten an das Benutzer-Computergerät (110) erneut übermitteln.

6. Verfahren nach Anspruch 1, wobei die Dienstanfrage, die mit der Dienstanfragekennung assoziiert ist, eine Händler-Finanzkontokennung umfasst, die mit einem Händlersystem-Zahlungskonto assoziiert ist, wobei das eine oder die mehreren Computergeräte (140) eine Benutzer-Zahlungskontokennung extrahieren, die mit einem Benutzer-Zahlungskonto assoziiert ist und wobei das Verarbeiten (250, 680) der Dienstanfrage die Kommunikation mit einem der Benutzer-Finanzkontokennung zugeordneten Emittentensystem (150) umfasst, um eine finanzielle Transaktion zwischen dem Benutzer-Zahlungskonto und dem Händler-Zahlungskonto zu verarbeiten.

7. Verfahren nach Anspruch 1, ferner umfassend:
Empfangen (240, 505), durch das Service-Computergerät (130), einer ersten Eingabe;
in Reaktion auf das Empfangen der ersten Eingabe, Erzeugen (240, 520) durch das Service-Computergerät (130) der Dienstanfragekennung und Anzeigen (240, 515) eines Bildes;
Übermitteln (240, 520), durch das Service-Computergerät (130) und an ein oder mehrere Computergeräte (140), der Dienstanfragekennung und der Bildkennung, die mit dem angezeigten Bild assoziiert sind;
Aussenden (240, 540) über eine Audiokomponente (138) des Service-Computergeräts (130), des Audiotokens, wobei das Audiotoken die Dienstanfragekennung und die Bildkennung, die mit dem angezeigten Bild assoziiert sind, umfasst,
wobei das Empfangen (240, 560) durch das Benutzer-Computergerät (110) das Empfangen des Audiotokens umfasst, das von dem Service-Computergerät (130) ausgesendet wird.

8. Verfahren nach Anspruch 7, wobei die erste Eingabe eine Eingabe *einer* Auswahl von Daten umfasst, die in dem Service-Computergerät (130) gespeichert sind, wobei Details der Dienstanfrage die ausgewählten Daten umfassen, wobei das eine oder die mehreren Computergeräte (140) eine Benutzer-Finanzkontokennung extrahieren, die mit einem Benutzer-Zahlungskonto assoziiert ist, und wobei das Verarbeiten (250, 680) der Dienstanfrage das Kommunizieren der ausgewählten Daten an das Benutzer-Computergerät (110) umfasst.

9. Computerprogrammprodukt, umfassend:
ein nichtflüchtiges computerlesbares Medium mit darauf verkörperten computerausführbaren Programmanweisungen, die, bei Ausführung durch ein Computergerät, das Computergerät veranlassen, Dienstanfragen basierend auf Informationen zu verarbeiten, die mit Computergeräten assoziiert sind, die über Audiokommunikationskanäle gemäß dem Verfahren nach einem der Ansprüche 1 bis 8 kommunizieren.

10. System (100) zur Verarbeitung von Dienstanfragen basierend auf Informationen, die mit Computergeräten assoziiert sind, die über Audiokommunikationskanäle kommunizieren, umfassend:
ein Dienst-Computergerät (130);
ein zweites Computergerät (110);
ein oder mehrere Computergeräte (140);
ein Speichergerät;
eine Audiokomponente (118); und
einen mit dem Speichergerät kommunikativ gekoppelten Prozessor, wobei der Prozessor Anwendungscodeanweisungen ausführt, die in dem Speichergerät gespeichert sind, um das System (100) zu veranlassen zum:
Empfangen (240, 560) eines Audiotokens über einen Audiokommunikationskanal über die Audiokomponente (118), umfassend eine Dienstanfragekennung, Dienstanfragedetails und eine Bildkennung, die einem Bild entspricht, das durch das Service-Computergerät (130) angezeigt wird, das das Audiotoken übermittelt, wobei das angezeigte Bild nach dem Zufallsprinzip aus einer Vielzahl gespeicherter Bilder zur Anzeige durch das Service-Computergerät (130) ausgewählt wird;
Anzeigen (250, 610), durch das zweite Computergerät (110), einer oder mehrerer Dienstanfragedetails, eines Bildes, das der Bildkennung entspricht, und eines oder mehrerer anderer Bilder;
Empfangen (250, 620) einer zweiten Eingabe durch das zweite Computergerät (110), umfassend eine Auswahl des angezeigten Bildes, das der Bildkennung entspricht; und
Übermitteln (250, 630), in Reaktion auf das Empfangen der zweiten Eingabe, durch das zweite Computergerät (110) und an das eine oder die mehreren Computergeräte (140), der Dienstanfragekennung, der Bildkennung, und einer Benutzerkontokennung, wobei das eine oder die mehreren Computergeräte (140) konfiguriert sind, eine Dienstanfrage basierend auf Transaktionsdetails zu verarbeiten, die von dem Service-Computergerät (130) empfangen werden, mit der Dienstanfragekennung assoziiert sind und auf Benutzerkontoinformationen basieren, die mit der Benutzerkontokennung assoziiert sind.

11. System nach Anspruch 10, wobei das Service-Computergerät (130) konfiguriert ist, eine erste Eingabe zu empfangen (240, 505), wobei in Reaktion auf das Empfangen der Eingabe das Service-Computergerät (130) konfiguriert ist, eine Dienstanfragekennung zu erzeugen (240, 520) und ein Bild anzuzeigen; wobei das Service-Computergerät (130) die Transaktionsdetails, die Dienstanfragekennung und eine Bildkennung, die mit dem angezeigten Bild assoziiert ist, an ein oder mehrere Computergeräte (140) übermittelt (240, 520); und wobei das Service-Computergerät (130) konfiguriert ist, das Audiotoken über eine Audiokomponente (138) des ersten Computergeräts (130), umfassend die Transaktionskennung und die Bildkennung, auszusenden.

12. System nach Anspruch 10, wobei der Prozessor ferner konfiguriert ist, Anwendungscodeanweisungen, die auf dem Speichergerät gespeichert sind, auszuführen, um das System zu Folgendem zu veranlassen:
Empfangen (240, 550) einer Eingabe einer Auswahl einer Anwendung; und
Aktivieren (240, 560) einer Mikrofonkomponente (119) des zweiten Computergeräts (110) in Reaktion auf das Empfangen der Eingabe der Auswahl der Anwendung; und
Empfangen (240, 560) des Audiotokens über die aktivierte Mikrofonkomponente (119).

13. System nach Anspruch 10, wobei das Audio-Token über Ultraschallkommunikation oder hörbare Audiokommunikation empfangen wird.

## Revendications

1. Procédé mis en œuvre par ordinateur (200) pour le traitement des demandes de service sur la base d'informations associées à des dispositifs informatiques qui communiquent via des canaux de communication audio, comprenant :
la réception (240, 560), par un dispositif informatique utilisateur (110) et à partir d'un dispositif informatique de service (130), d'un jeton audio via un canal de communication audio comprenant un premier identifiant de demande de service et un premier identifiant d'image ;
l'affichage (250, 610), par le dispositif informatique utilisateur (110), d'une image stockée correspondant au premier identifiant d'image et d'une ou plusieurs autres images,
la réception (250, 620), par le dispositif informatique utilisateur (110), d'une deuxième entrée comprenant une sélection de l'image stockée correspondant au premier identifiant d'image ;
la transmission (250, 630), par le dispositif informatique utilisateur (110) et à un ou plusieurs dispositifs informatiques (140), de l'identifiant de demande de service, du premier identifiant d'image correspondant à l'image sélectionnée, et d'un identifiant de compte utilisateur associé au dispositif informatique utilisateur (110) ;
la réception (240, 520), par les un ou plusieurs dispositifs informatiques (140) et à partir du dispositif informatique de service (130), d'un deuxième identifiant de demande de service, d'un deuxième identifiant de dispositif informatique de service, et d'un deuxième identifiant d'image correspondant à une deuxième image affichée par le dispositif informatique de service (130), la deuxième image affichée correspondant au premier identifiant d'image et étant sélectionnée de manière aléatoire pour affichage par le dispositif informatique de service (130) parmi une pluralité d'images stockées ;
la réception (250, 650), par les un ou plusieurs dispositifs informatiques (140) et à partir du dispositif informatique utilisateur (110), de l'identifiant de demande de service, du premier identifiant d'image correspondant à l'image stockée, et de l'identifiant de compte utilisateur associé au dispositif informatique utilisateur ;
la détermination (250, 670), par les un ou plusieurs dispositifs informatiques (140), que le deuxième identifiant d'image et le deuxième identifiant de demande de service reçus à partir du dispositif informatique de service (130) concorde avec le premier identifiant d'image et le premier identifiant de demande de service reçus à partir du dispositif informatique utilisateur (110), respectivement ;
en réponse à la détermination que le deuxième identifiant d'image et le deuxième identifiant de demande de service reçus du dispositif informatique de service (130) concorde avec le premier identifiant d'image et le premier identifiant de demande de service reçus à partir du dispositif informatique utilisateur (110), la récupération d'informations de compte utilisateur associées à l'identifiant de compte utilisateur reçu à partir du dispositif informatique utilisateur (110) et des informations de compte de service associées à l'identifiant de dispositif informatique de service reçu à partir du dispositif informatique de service (130) ; et
le traitement (250, 680), par les un ou plusieurs dispositifs informatiques (140), de la demande de service associée à l'identifiant de demande de service sur la base des informations de compte utilisateur et des informations de compte de service.

2. Procédé selon la revendication 1, comprenant en outre :
la réception (240, 550), par le dispositif informatique utilisateur (110), d'une entrée d'une sélection d'une application ; et
l'activation (240, 560), par le dispositif informatique utilisateur (110), d'un composant de microphone (119) du premier dispositif informatique utilisateur (110) en réponse à la réception de l'entrée de la sélection de l'application, dans lequel le dispositif informatique utilisateur (110) reçoit le jeton audio transmis depuis le dispositif informatique de service (130) via le composant de microphone activé (119).

3. Procédé selon la revendication 1, dans lequel le dispositif informatique de service (130) transmet le jeton audio au dispositif informatique utilisateur (110) via un canal de communication d'ultrason.

4. Procédé selon la revendication 1, dans lequel le dispositif informatique de service (130) transmet le jeton audio au dispositif informatique utilisateur (110) via un canal de communication de son audible.

5. Procédé selon la revendication 1, comprenant en outre la transmission, par le dispositif informatique de service (130), de données à un ou plusieurs dispositifs informatiques (140), dans lequel les un ou plusieurs dispositifs informatiques (140) retransmettent les données au dispositif informatique utilisateur (110) .

6. Procédé selon la revendication 1, dans lequel la demande de service associée à l'identifiant de demande de service comprend un identifiant de compte financier de commerçant associé à un compte de paiement de système de commerçant, dans lequel les un ou plusieurs dispositifs informatiques (140) extraient un identifiant de compte financier d'utilisateur associé à un compte de paiement d'utilisateur, et dans lequel le traitement (250, 680) de la demande de service comprend la communication avec un système émetteur (150) associé à l'identifiant de compte financier d'utilisateur pour traiter une transaction financière entre le compte de paiement d'utilisateur et le compte de paiement de commerçant.

7. Procédé selon la revendication 1, comprenant en outre :
la réception (240, 505), par le dispositif informatique (130), de première entrée ;
en réponse à la réception de la première entrée, la génération (240, 520), par le dispositif informatique de service (130), de l'identifiant de demande de service et l'affichage (240, 515) d'une image ;
la transmission (240, 520), par le dispositif informatique de service (130) et à un ou plusieurs dispositifs informatiques (140), de l'identifiant de demande de service et de l'identifiant d'image associé à l'image affichée ;
la diffusion (240, 540), via un composant audio (138) du dispositif informatique de service (130), du jeton audio, le jeton audio comprenant l'identifiant de demande de service et l'identifiant d'image associé à l'image affichée,
dans lequel la réception (240, 560), par le dispositif informatique utilisateur (110), du jeton audio comprend la réception du jeton audio diffusé par le dispositif informatique de service (130).

8. Procédé selon la revendication 7, dans lequel la première entrée comprend une entrée *d'une* sélection de données stockées sur le dispositif informatique de service (130), dans lequel les détails de la demande de service comprennent les données sélectionnées, dans lequel les un ou plusieurs dispositifs informatiques (140) extraient un identifiant de compte financier d'utilisateur associé à un compte de paiement d'utilisateur, et dans lequel le traitement (250, 680) de la demande de service comprend la communication des données sélectionnées au dispositif informatique utilisateur (110).

9. Produit de programme informatique, comprenant
un support non transitoire lisible par ordinateur ayant des instructions de programme exécutables par ordinateur : incorporées sur celui-ci qui, lorsqu'elles sont exécutées par un dispositif informatique, amènent le dispositif informatique à traiter des demandes de service sur la base d'informations associées à des dispositifs informatiques qui communiquent via des canaux de communication audio conformément au procédé de l'une quelconque des revendications 1 à 8.

10. Système (100) pour le traitement de demandes de service sur la base d'informations associées à des dispositifs informatiques qui communiquent via des canaux de communication audio, comprenant :
un dispositif informatique de service (130) ;
un deuxième dispositif informatique (110) ;
un ou plusieurs dispositifs informatiques (140) ;
un dispositif de stockage ;
un composant audio (118) ; et
un processeur couplé de manière communicative au dispositif de stockage, dans lequel le processeur exécute des instructions de code d'application qui sont stockées dans le dispositif de stockage pour amener le système (100) à :
recevoir (240, 560) un jeton audio sur un canal de communication audio via le composant audio (118) comprenant un identifiant de demande de service, des détails de demande de service, et un identifiant d'image correspondant à une image affichée par le dispositif informatique de service (130) transmettant le jeton audio, l'image affichée étant sélectionnée de manière aléatoire pour affichage par le dispositif informatique de service (130) parmi une pluralité d'images stockées ;
afficher (250, 610), par le deuxième dispositif informatique (110), un ou plusieurs détails de demande de service, une image correspondant à l'identifiant d'image, et une ou plusieurs autres images ;
recevoir (250, 620), par le deuxième dispositif informatique (110), une deuxième entrée comprenant une sélection de l'image affichée correspondant à l'identifiant d'image ; et
transmettre (250, 630), en réponse à la réception de la deuxième entrée, par le deuxième dispositif informatique (110) et aux un ou plusieurs dispositifs informatiques (140), l'identifiant de demande de service, l'identifiant d'image et un identifiant de compte utilisateur, dans lequel les un ou plusieurs dispositifs informatiques (140) sont configurés pour traiter une demande de service sur la base des détails de transaction reçus à partir du dispositif informatique de service (130) qui sont associés à l'identifiant de demande de service et sur la base d'informations de compte utilisateur associées à l'identifiant de compte d'utilisateur.

11. Système selon la revendication 10, dans lequel le dispositif informatique de service (130) est configuré pour recevoir (240, 505) une première entrée, dans lequel en réponse à la réception de l'entrée, le dispositif informatique de service (130) est configuré pour générer (240, 520) un identifiant de demande de service et afficher une image ; dans lequel le dispositif informatique de service (130) transmet (240, 520), à un ou plusieurs dispositifs informatiques (140), les détails de transaction, l'identifiant de demande de service et un identifiant d'image associé à l'image affichée ; et dans lequel le dispositif informatique de service (130) est configuré pour diffuser le jeton audio via un composant audio (138) du premier dispositif informatique (130) comprenant l'identifiant de transaction et l'identifiant d'image.

12. Système selon la revendication 10, dans lequel le processeur est en outre configuré pour exécuter des instructions de code d'application qui sont stockées dans le dispositif de stockage pour amener le système à :
recevoir (240, 550) une entrée d'une sélection d'une application ; et
activer (240, 560) un composant de microphone (119) du deuxième dispositif informatique (110) en réponse à la réception de l'entrée de la sélection de l'application ; et
recevoir (240, 560) le jeton audio via le composant de microphone activé (119).

13. Système selon la revendication 10, dans lequel le jeton audio est reçu via une communication par ultrasons ou une communication de sons audibles.
